# EUROPEAN PATENT SPECIFICATION

(11) **EP 4 184 898 B1**
(45) Date of publication and mention of the grant of the patent: **17.12.2025**
(21) Application number: 21843234.2
(22) Date of filing: 13.07.2021
(51) Int. Cl.: H04M 1/02, G09F 9/30, H04M 1/72469, G06F 1/16, G09G 3/00, H04N 5/262, H04N 23/51, H04N 23/90

(54) **ELECTRONIC DEVICE COMPRISING FLEXIBLE DISPLAY**
ELEKTRONISCHE VORRICHTUNG MIT FLEXIBLER ANZEIGE
DISPOSITIF ÉLECTRONIQUE COMPRENANT UN ÉCRAN FLEXIBLE

(30) Priority: 14.07.2020 KR 20200086965; 09.06.2021 KR 20210074852
(43) Date of publication of application: 24.05.2023
(73) Proprietor: Samsung Electronics Co., Ltd., Suwon-si, Gyeonggi-do 16677 (KR)
(72) Inventor: KIM, Daehyun, Suwon-si, Gyeonggi-do 16677 (KR); KIM, Raetae, Suwon-si, Gyeonggi-do 16677 (KR); SHIN, Moonchul, Suwon-si, Gyeonggi-do 16677 (KR); YUN, Inkuk, Suwon-si, Gyeonggi-do 16677 (KR); JUNG, Hojin, Suwon-si, Gyeonggi-do 16677 (KR); JI, Youngmin, Suwon-si, Gyeonggi-do 16677 (KR); HONG, Hyunju, Suwon-si, Gyeonggi-do 16677 (KR)
(74) Representative: HGF
(86) International application number: PCT/KR2021/008926
(87) International publication number: WO 2022/014998

(56) References cited:
- EP-A1- 2 977 850
- CN-A- 107 566 572
- CN-B- 108 255 378
- CN-U- 208 369 642
- CN-U- 210 072 464
- KR-A- 20150 009 744
- KR-A- 20150 110 848
- KR-A- 20170 013 849
- US-A1- 2020 103 942

## Description

### [Technical Field]

Various embodiments of this document relate to a structure of an electronic device including a flexible display, and an operation method of the electronic device.

### [Background Art]

With the increase in use of portable electronic devices, development of hardware has been continuously in progress along with development of software. Particularly, in respect of hardware, various types of electronic devices capable of meeting users' demands are being invented for convenience of portability and manipulation.

The shape of electronic devices is not limited to a typical bar shape, and various structures of electronic devices are being developed such as a bendable shape, a shape of the electronic device including multiple housings and thus being foldable, or a shape in which some housings among multiple housings are able to slide in or out.

Documents CN 208 369 642 U and EP 2 977 850 A1 relate to portable electronic devices comprising flexible displays adapted to be folded.

### [Disclosure of Invention]

### [Technical Problem]

According to a conventional technology, in the case of an electronic device in which the entire area of the display is foldable or which has a changeable shape, a user may have difficulty in carrying or manipulating the device with one hand.

According to a conventional technology, a user may have difficulty in carrying or manipulating the device, and thus the device may be unable to provide an improved user experience.

### [Technical Solution]

The invention is directed to the subject-matter of the independent claims. Advantageous embodiments are set out in the dependent claims.

An electronic device according to an embodiment of this document may include: a first housing including a first edge having a first length, a second edge that is perpendicular to the first edge and has a second length shorter than the first length, a third edge that is parallel to the first edge and has the first length, and a fourth edge that is parallel to the second edge and has the second length; a second housing that includes a fifth edge having a vertical length of a third length shorter than the first length along the third edge, and is rotatable about a hinge corresponding to the third length; a flexible display including a first area and a second area corresponding to the first housing and a third area corresponding to the second housing, the first area being an area corresponding to the second length and the third length, the second area being an area remaining after excluding the first area from an area of the first housing, the third area of the flexible display rotating with respect to the first area and the second area according to rotation of the second housing about the hinge; and at least one processor electrically connected to the flexible display, wherein the at least one processor displays a content in at least one area among the first area, the second area, and the third area of the flexible display, based on a positional relationship between the first housing and the second housing.

### [Advantageous Effects of Invention]

According to various embodiments of this document, a user may easily carry a foldable electronic device with one hand and may conveniently manipulate same.

According to various embodiments of this document, the shape of an electronic device and the display area of a display thereof may be changed while a user's holding state is maintained.

According to various embodiments of this document, a display area may be efficiently used while user convenience of portability and manipulation is secured.

Effects which are able to be acquired based on various embodiments are not limited to the effects described above, and other effects that have not been mentioned may be clearly understood by a person who has common knowledge in the technical field to which the disclosure belongs, from the following description.

### [Brief Description of Drawings]

FIG. 1 is a block diagram of an electronic device in a network environment according to an embodiment;
FIG. 2 is a diagram briefly illustrating a configuration of an electronic device according to an embodiment;
FIG. 3 is a diagram briefly illustrating a structure of an electronic device according to an embodiment;
FIG. 4 is a diagram illustrating a change of a structure of an electronic device according to an embodiment;
FIG. 5 is a diagram illustrating a change of a structure of an electronic device when viewed from the side thereof according to an embodiment;
FIG. 6 is a diagram illustrating a change of a structure of an electronic device according to an embodiment;
FIG. 7 is an exploded perspective view of an electronic device according to an embodiment;
FIG. 8 is a diagram illustrating a specific structure of an electronic device according to an embodiment;
FIG. 9 is a diagram illustrating a reinforcing structure of an electronic device according to an embodiment;
FIG. 10 is a diagram illustrating a reinforcing structure of an electronic device according to an embodiment;
FIG. 11 is a diagram illustrating a reinforcing structure of an electronic device according to an embodiment;
FIG. 12 is a diagram illustrating a reinforcing structure of an electronic device according to an embodiment;
FIG. 13 is a diagram illustrating a structure of an electronic device according to another embodiment;
FIG. 14 is a diagram illustrating a structure of an electronic device according to another embodiment;
FIG. 15 is a flowchart illustrating an operation of an electronic device according to an embodiment;
FIG. 16 is a diagram illustrating an area of a display of an electronic device according to an embodiment;
FIG. 17 is a diagram illustrating displaying of a content in a display area of an electronic device according to another embodiment;
FIG. 18 is a diagram illustrating displaying of a content in a display area of an electronic device according to another embodiment;
FIG. 19 is a diagram illustrating displaying of a content in a display area of an electronic device according to another embodiment;
FIG. 20 is a diagram illustrating displaying of a content in a display area of an electronic device according to another embodiment;
FIG. 21 is a diagram illustrating displaying of a content in a display area of an electronic device according to another embodiment;
FIG. 22 is a diagram illustrating displaying of a content in a display area of an electronic device according to another embodiment;
FIG. 23 is a diagram illustrating displaying of an image in a display area of an electronic device according to an embodiment;
FIG. 24 is a diagram illustrating displaying of an image and a user interface in a display area of an electronic device according to an embodiment;
FIG. 25 is a diagram illustrating displaying of images having different attributes in a display area of an electronic device according to an embodiment;
FIG. 26 is a diagram illustrating displaying of images having different attributes in a display area of an electronic device according to another embodiment;
FIG. 27 is a flowchart illustrating displaying of a user interface in a lateral area of a display by an electronic device according to an embodiment;
FIG. 28 is a diagram illustrating displaying of a user interface in a lateral area of a display by an electronic device according to an embodiment;
FIG. 29 is a diagram illustrating an effect resulting from an additional function of a display area of an electronic device according to an embodiment;
FIG. 30 is a diagram illustrating an additional function allowed by a structure of an electronic device according to an embodiment;
FIG. 31 is a diagram illustrating an effect resulting from an additional function of a display area of an electronic device according to an embodiment;
FIG. 32 is a diagram illustrating a screen displayed in a display area according to a handling state of an electronic device according to an embodiment; and
FIG. 33 is a diagram illustrating an additional function allowed by a structure of an electronic device according to an embodiment.

### [Best Mode for Carrying out the Invention]

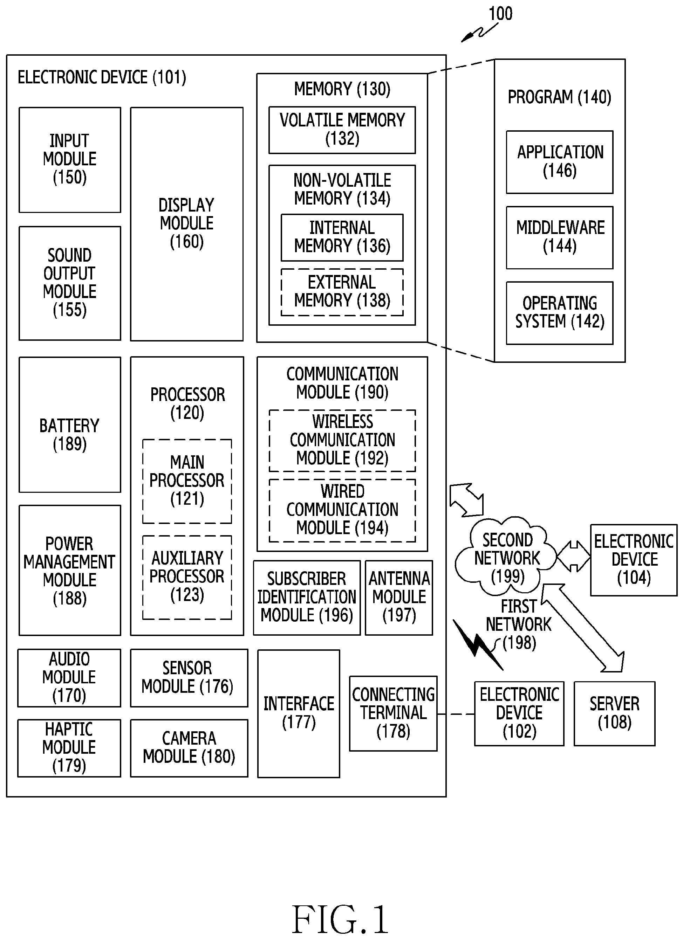

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

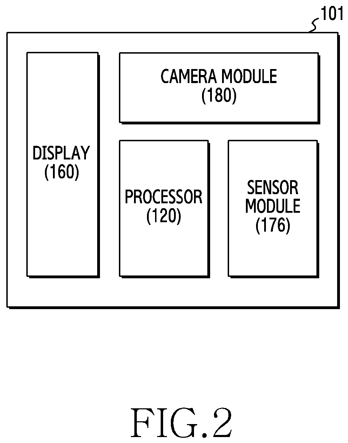

FIG. 2 briefly illustrates a configuration of an electronic device according to an embodiment.

According to an embodiment, the electronic device 101 may at least include a processor 120, a display (or a display module 160), a sensor module 176, and a camera module 180.

According to an embodiment, the display 160 may display an image and/or a content.

In an embodiment, the display 160 may display an image obtained by the camera module 180 according to control of the processor 120. In an embodiment, the display 160 may display a content according to a program embedded in the electronic device 101 according to control of the processor 120.

According to an embodiment, the display 160 may have multiple areas to display an image and/or a content. For example, according to a change of the shape of the electronic device 101, the display 160 may display an image and/or a content in at least one area among multiple display areas according to control of the processor 120.

In an embodiment, the display 160 may be a flexible display. For example, the display 160 may be bendable, foldable, or slidable.

According to an embodiment, the sensor module 176 may detect a change in the shape and/or posture of the electronic device 101.

In an embodiment, the electronic device 101 may detect a change in the shape of the electronic device 101 according to control of the processor 120, based on the sensor module 176. For example, the change in the shape may be a shape change caused by folding of the electronic device 101.

In an embodiment, the electronic device 101 may detect a change in the posture of the electronic device 101 according to control of the processor 120, based on the sensor module 176. For example, the change in the posture may be a posture change for the inclination (or angle) of the electronic device 101 to the ground surface, and/or the spatial coordinates thereof.

In an embodiment, the electronic device 101 may detect a change in the state of the display 160 according to control of the processor 120, based on the sensor module 176.

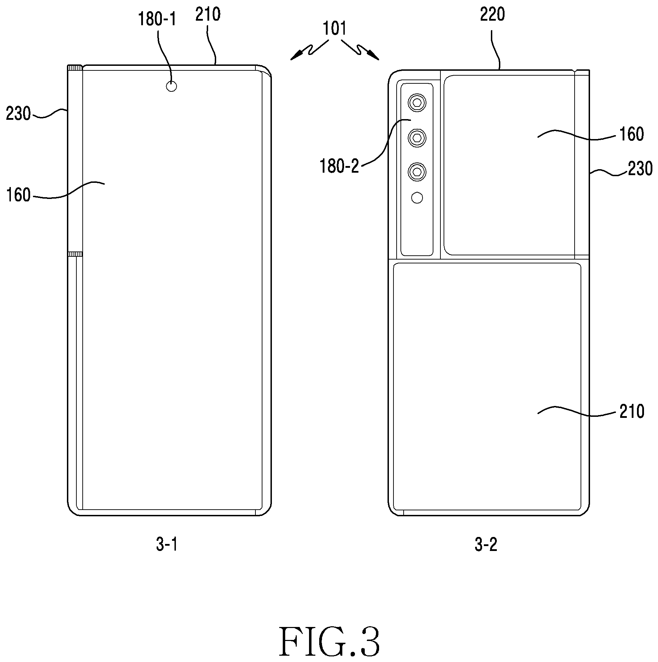

According to an embodiment, the camera module 180 may include a front camera module (e.g., a front camera module 180-1 in FIG. 3) and/or a rear camera module (e.g., a rear camera module 180-2 in FIG. 3).

According to an embodiment, the camera module 180 may obtain images outside the electronic device 101 according to control of the processor 120.

According to an embodiment, the processor 120 may at least control operations of the display 160, the sensor module 176, and the camera module 180.

FIG. 3 is a diagram briefly illustrating a structure of an electronic device according to an embodiment. Specifically, diagram 3-1 illustrates a front surface of the electronic device 101, and diagram 3-2 illustrates a rear surface of the electronic device 101.

In an embodiment, referring to diagram 3-1 and diagram 3-2, the electronic device 101 may include a first housing 210 and a second housing 220.

In an embodiment, a hinge 230 may be disposed between the first housing 210 and the second housing 220. For example, the first housing 210 and the second housing 220 may be connected to each other through the hinge 230.

In an embodiment, the second housing 220 may be rotatable about the hinge 230 with respect to the first housing 210. For example, the second housing 220 may be rotatable with respect to the first housing 210 about the hinge 230 disposed between the first housing 210 and the second housing 220.

In an embodiment, there may be a size difference between the first housing 210 and the second housing 220.

In an embodiment, the first housing 210 may include a first edge having a first length, a second edge perpendicular to the first edge and having a second length shorter than the first length, a third edge parallel to the first edge and having the first length, and a fourth edge parallel to the second edge and having the second length. As another example, the first housing 210 may have a rectangular shape surrounded by the first edge to the fourth edge.

In an embodiment, the second housing 220 may be at least configured by: an edge (e.g., a fifth edge) having a vertical length of a third length shorter than the first length along the third edge; an edge (e.g., a sixth edge) which is perpendicular to the edge (e.g., the fifth edge) of a vertical length of the third length and has a transverse length of a fourth length; an edge (e.g., a seventh edge) which is parallel to the edge (e.g., the fifth edge) of a vertical length of the third length and has the third length; and an edge (e.g., an eighth edge) which is parallel to the edge (e.g., the sixth edge) of a transverse length of the fourth length and has the fourth length. As another example, the second housing 220 may has a rectangular shape smaller than the first housing 210, and may be surrounded by the fifth edge to the eighth edge.

In an embodiment, the display 160 may be disposed on the first housing 210 and the second housing 220. For example, the display 160 may be disposed on front surfaces of the first housing 210 and the second housing 220.

In an embodiment, the front camera module 180-1 may be disposed on the front surface of the first housing 210, and may obtain an image in a front direction of the electronic device 101.

In an embodiment, the rear camera module 180-2 may be disposed on a rear surface of the second housing 220, and may obtain an image in a rear direction of the electronic device 101.

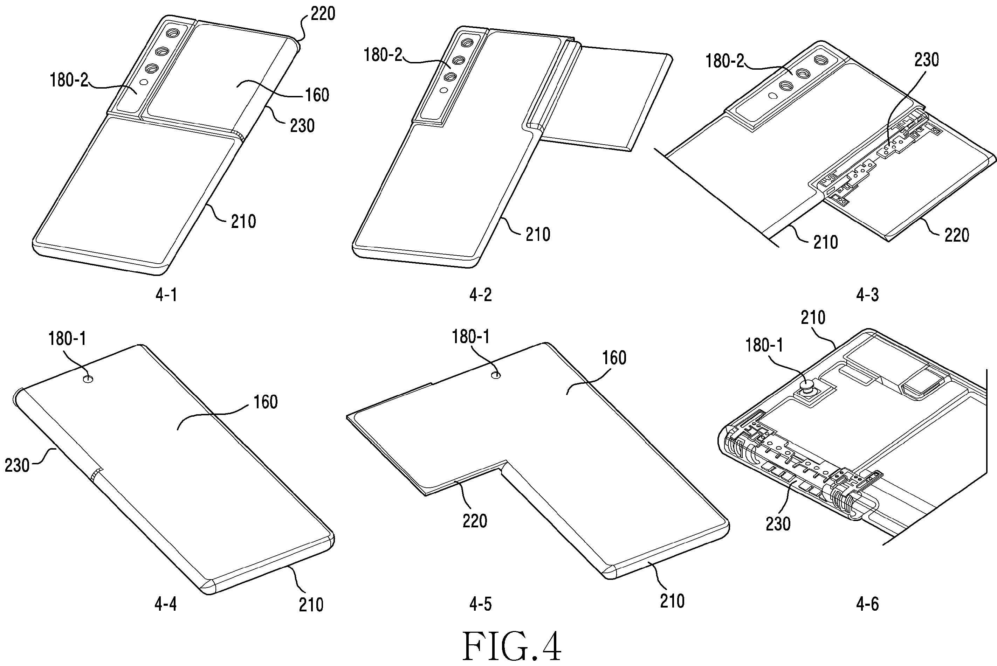

FIG. 4 is a diagram illustrating a change of a structure of an electronic device according to an embodiment. Diagram 4-1 to diagram 4-3 show a structure change of an electronic device when viewed from the rear thereof, and diagram 4-4 to diagram 4-6 show a structure change of an electronic device when viewed from the front thereof.

In an embodiment, referring to diagram 4-1 to diagram 4-3, the second housing 220 of the electronic device 101 may rotate about the hinge 230 with respect to the first housing 210. The display 160 may be disposed on the front surfaces of the first housing 210 and the second housing 220, and an area of the second housing 220 among areas of the display 160 may be rotated together with the second housing 220 rotating about the hinge 230.

In an embodiment, the second housing 220 may rotate about the hinge 230, whereby the rear surface of the second housing 220 faces a rear surface of the first housing 210.

In an embodiment, the hinge 230 may be disposed between the first housing 210 and the second housing, and the hinge 230 may include a hinge structure and a hinge housing.

In an embodiment, the rear camera module 180-2 may be disposed on the rear surface of the first housing 210. The sum of the transverse length of the rear camera module 180-2 and the transverse length of the second housing 220 may correspond to the second length of the first housing 210. In addition, the vertical length of the rear camera module 180-2 may correspond to the third length of the second housing.

In an embodiment, referring to diagram 4-4 to diagram 4-6, the display 160 may be disposed on the front surface of the electronic device 101. For example, the display 160 may be disposed on the front surfaces of the first housing 210 and the second housing 220, and may have a shape of "┐" due to the size difference between the first housing 210 and the second housing 220.

In an embodiment, as in diagram 4-4, the second housing 220 may be rotated about the hinge 230, whereby the rear surface of the second housing 220 faces the rear surface of the first housing 210. For example, in case where the rear surface of the second housing 220 faces the rear surface of the first housing 210, when the electronic device 101 is viewed from the front thereof, a rectangular shape may appear.

In an embodiment, as in diagram 4-5, when the display 160 is fully extended by rotating the second housing 220 about the hinge 230, the electronic device 101 may have a shape of "┐".

In an embodiment, as in diagram 4-6, the hinge 230 may be disposed between the first housing 210 and the second housing 220, and the hinge 230 may include a hinge structure and a hinge housing.

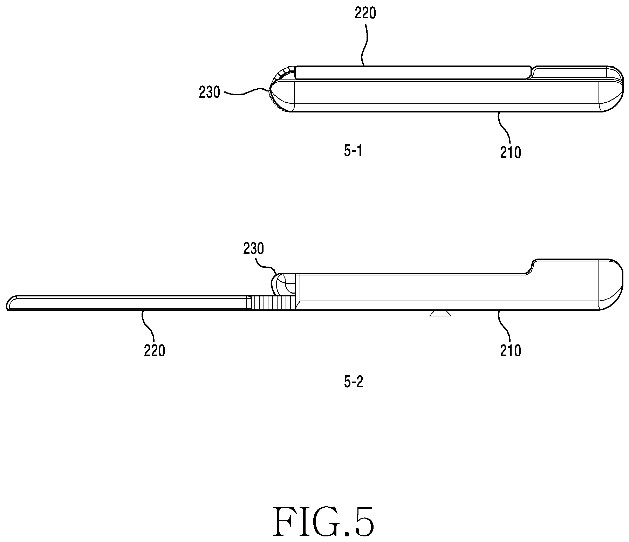

FIG. 5 is a diagram illustrating a change of a structure of an electronic device when viewed from the side thereof according to an embodiment.

According to an embodiment, diagram 5-1 shows the rear surface of the first housing 210 and the rear surface of the second housing 220 facing each other or being in contact with each other due to rotation of the second housing 220 when viewed from the side thereof, and diagram 5-2 shows the electronic device of diagram 4-5 as a result of rotation of the second housing 220 when viewed from the side thereof.

According to an embodiment, the second housing 220 may be rotatable by at least 180 degrees about the hinge 230 with respect to the first housing.

In an embodiment, referring to diagram 5-1, the rear surface of the second housing 220 may face the rear surface of the first housing 220. In this case, when the front surface of the first housing 210 or the electronic device 101 is viewed, the second housing 220 may not be seen or may be only at least partially seen. When the second housing 220 rotates by at least 180 degrees about the hinge 230, a lateral surface of the electronic device 101 may has a shape as seen in diagram 5-2.

In an embodiment, referring to diagram 5-2, the rear surface of the second housing 220 may be parallel to the rear surface of the first housing 220. The second housing 220 may have an angle of 180 degrees with respect to the first housing 210.

In an embodiment, the second housing 220 of the electronic device 101 may be moved with respect to the first housing 210 by the hinge 230. For example, the second housing 220 may be moved with respect to the first housing 210, and the first housing 210, the second housing 220, and the hinge 230 may be arranged in a straight line.

According to an embodiment, a shape of the electronic device 101 may be changed according to rotation of the second housing 220.

In an embodiment, an electronic device having a lateral shape as in diagram 5-1 may correspond to the shape of the electronic device in diagram 4-1, diagram 4-4, and diagram 4-6.

In an embodiment, an electronic device having a lateral shape as in diagram 5-2 may correspond to the shape of the electronic device in diagram 4-2, diagram 4-3, and diagram 4-5.

In an embodiment, the motion/movement of the second housing 220 of the electronic device 110 is not limited by the way described above, and the second housing may be motioned or moved in various ways so as to allow various shapes of the electronic device 101 so that a user receives images through areas of a display (e.g., the display 160).

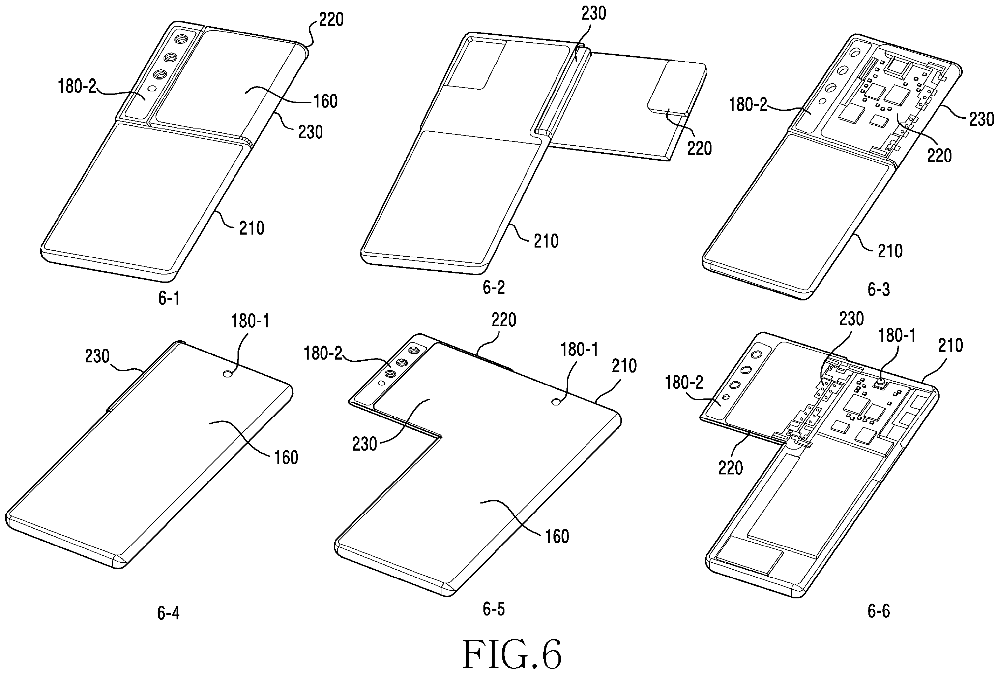

FIG. 6 is a diagram illustrating a change of a structure of an electronic device according to an embodiment.

Diagram 6-1 to diagram 6-3 show a structure change of an electronic device when viewed from the rear thereof, and diagram 6-4, diagram 6-5, and diagram 6-6 show a structure change of an electronic device when viewed from the front thereof.

In an embodiment, referring to diagram 6-1 to diagram 6-3, the second housing 220 of the electronic device 101 may rotate about the hinge 230 with respect to the first housing 210. The display 160 may be disposed on the front surfaces of the first housing 210 and the second housing 220, and an area of the second housing 220 among areas of the display 160 may be rotated together with the second housing 220 rotating about the hinge 230.

In an embodiment, the rear camera module 180-2 may be disposed on the front surface of the second housing 220. The sum of the transverse length of the rear camera module 180-2 and the transverse length of the second housing 220 may correspond to the second length of the first housing 210. In addition, the vertical length of the rear camera module 180-2 may correspond to the third length of the second housing.

In an embodiment, the second housing 220 may rotate about the hinge 230, whereby the rear surface of the second housing 220 faces a rear surface of the first housing 210. In an embodiment, while the second housing 220 rotates about the hinge 230, the rear camera module 180-2 disposed on the front surface of the second housing 220 may also rotate.

In an embodiment, in a shape as in diagram 6-1, the electronic device 101 may obtain an image in a rear direction by using the rear camera module 180-2.

In an embodiment, in a shape as in diagram 6-2, the electronic device 101 may obtain an image in a front direction by using the rear camera module 180-2.

In an embodiment, referring to diagram 6-4 to diagram 6-6, the display 160 may be disposed on the front surface of the electronic device 101. For example, the display 160 may be disposed on the front surfaces of the first housing 210 and the second housing 220, and may have a shape of "┐ " due to the size difference between the first housing 210 and the second housing 220 when the display 160 is fully extended.

In an embodiment, as in diagram 6-4, the second housing 220 may be rotated about the hinge 230, whereby the rear surface of the second housing 220 faces the rear surface of the first housing 210. In this case, the rear camera module 180-2 disposed on the front surface of the second housing 220 may face the rear direction. In addition, when the electronic device 101 is viewed from the front thereof, the electronic device may have a rectangular shape.

In an embodiment, as in diagram 6-5, when the display 160 is fully extended by rotating the second housing 220 about the hinge 230, the electronic device 101 may have a shape of "┐ ". In this case, the rear camera module 180-2 disposed on the front surface of the second housing 220 may face the front direction of the electronic device 101 or the first housing 210.

In an embodiment, as in diagram 6-6, the hinge 230 may be disposed between the first housing 210 and the second housing 220, and the hinge 230 may include a hinge structure and a hinge housing.

In an embodiment, diagram 6-4 to diagram 6-6 illustrate the front camera module 180-1 disposed on the first housing 210. However, the rear camera module 180-2 rotates, and thus the disposition may be omitted.

In an embodiment, as in diagram 6-1 and diagram 6-4, a positional relationship in which the rear surface of the first housing 220 faces the rear surface of the second housing 210 may be a first positional relationship.

In an embodiment, as in diagram 6-2 and diagram 6-5, a positional relationship in which the flexible display 160 is fully extended by rotating the second housing 220 about the hinge 230 may be a second positional relationship.

In an embodiment, a positional relationship in which the angle between the first housing 210 and the second housing 220 is greater than that in the first positional relationship and smaller than that in the second positional relationship may be a third positional relationship.

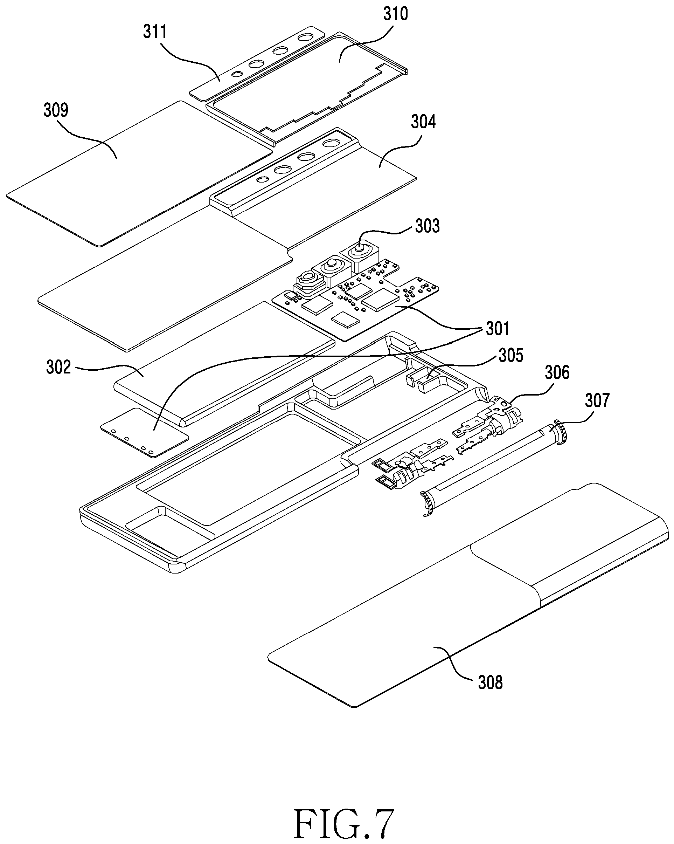

FIG. 7 is an exploded perspective view of an electronic device according to an embodiment.

In an embodiment, the electronic device 101 may include a printed circuit board 301. In an embodiment, a battery 302 may be disposed on the PCB 301. In addition, a rear camera module 303 may be disposed on the PCB 301. In an embodiment, the PCB 301, the battery 302, and the rear camera module 303 may be included in a first housing (e.g., the first housing 210).

In an embodiment, a front housing 305, and a rear housing 304 may configure an outer appearance of the first housing (e.g., the first housing 210).

In an embodiment, a hinge structure 306 and a hinge housing 307 may be coupled to an edge (e.g., the third edge in FIG. 3) of the first housing (e.g., the first housing 210) including the front housing 305 and the rear housing 304. The hinge structure 306 and the hinge housing 307 may be a structure included in a hinge (e.g., the hinge 230).

In an embodiment, a second housing 310 may be coupled to the first housing (e.g., the first housing 210) including the front housing 305 and the rear housing 304 through the hinge 230 including the hinge structure 306 and the hinge housing 307. In an embodiment, the second housing 310 may correspond to the second housing 220 described above.

In an embodiment, a housing cover 309 and a camera cover 311 may be arranged on the rear housing 304 of the first housing (e.g., the first housing 210). For example, the housing cover 309 may cover the rear housing 304 to prevent damage from the outside. The camera cover 311 may protect the rear camera module 304 from an external material or impact.

In an embodiment, a display 308 may be disposed on the front housing 305 and the second housing 310. The display 308 may be a flexible display which is bendable, and may correspond to the display 160.

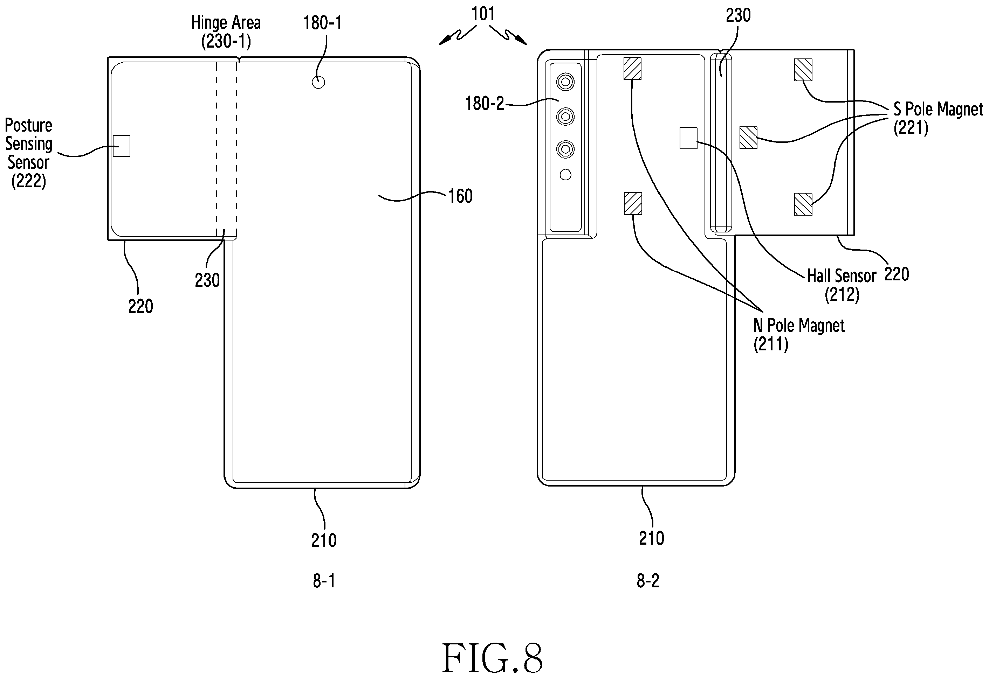

FIG. 8 is a diagram illustrating a specific structure of an electronic device according to an embodiment.

In an embodiment, referring to diagram 8-1, the electronic device 101 may include a sensor module (e.g., the sensor module 176), and the sensor module (e.g., the sensor module 176) may at least include a Hall sensor 212 and a posture sensing sensor 222.

In an embodiment, the electronic device 101 may identify a positional relationship (or state) of the second housing 220 to the first housing 210 by using the Hall sensor 212 according to control of a processor (e.g., the processor 120). For example, in case that the rear surface of the second housing 220 is in contact with the rear surface of the first housing 210, the electronic device 101 may identify a positional relationship before the display 160 is extended, based on the Hall sensor 212 according to control of the processor (e.g., the processor 120). As another example, in case that the rear surface of the second housing 220 has an angle of 180 degrees with respect to the rear surface of the first housing 210, the electronic device 101 may identify a positional relationship in which the display 160 is fully extended, based on the Hall sensor 212 according to control of the processor (e.g., the processor 120). In addition, the electronic device 101 may also identify a state between a positional relationship before extension and a positional relationship of full extension, based on the Hall sensor 212 according to control of the processor 120.

In an embodiment, the Hall sensor 212 may identify the strength of magnetic force of a magnet. The Hall sensor 212 may use the identified strength of magnetic force to identify a data value to which an input magnet strength and angle are mapped. The Hall sensor 212 may identify the data value to determine the angle made by the first housing 210 and the second housing 220 being unfolded.

In an embodiment, the electronic device 101 may identify the posture of the electronic device 101 by using the posture sensing sensor 222 according to control of the processor (e.g., the processor 120). For example, the posture sensing sensor 222 may identify a posture change according to the inclination (or angle) of the electronic device 101 to the ground surface, and/or the spatial coordinates thereof.

In an embodiment, in the electronic device 101, at least one separate posture sensing sensor (not illustrated) distinguished from the illustrated posture sensing sensor 222 may be disposed at a different position (e.g., on the PCB 301 under the first housing 210). The at least one separate posture sensing sensor (not illustrated) may be disposed at a position corresponding to the position at which the posture sensing sensor 222 is disposed, and the posture sensing sensor 222 and the at least one separate posture sensing sensor (not illustrated) may obtain identical direction data in the state where the display 160 is extended. In addition, in the state where the display 160 is not extended, the posture sensing sensor 222 and the at least one separate posture sensing sensor (not illustrated) may obtain different direction data. The electronic device 101 may identify an extension level and state (or the posture change of the electronic device 101) of the display 160, based on the posture sensing sensor 222 and the at least one separate posture sensing sensor (not illustrated) according to control of the processor (e.g., the processor 120).

In an embodiment, the disposition of the Hall sensor 212 and/or the posture sensing sensor 222 is not limited to diagram 8-1 and diagram 8-2, and there may be no limit.

In an embodiment, referring to diagram 8-2, the electronic device 101 may include magnets. For example, an N pole magnet 211 may be disposed on the rear surface of the first housing 210 of the electronic device 101, and an S pole magnet 221 may be disposed on the rear surface of the second housing 220. The N pole magnet 211 and the S pole magnet 221 are arranged on the respective housings (e.g., the first housing 210 and the second housing 220), whereby magnetic force maintaining the rear surface of the second housing 220 and the rear surface of the first housing 210 to face each other may be applied.

In an embodiment, a hinge area 230-1 may be in a display area of the display 160, and may also be called a lateral area. In an embodiment, the hinge area 230-1 may be an area on the display 160 corresponding to the area on which the hinge 230 connecting the first housing 210 to the second housing 220 exists. The hinge area (or lateral area) 230-1 described above will be described later.

In an embodiment, the position of the N pole magnet 211 and the S pole magnet 221 arranged in the electronic device 101 is an example, and the disclosure may not be limited thereto.

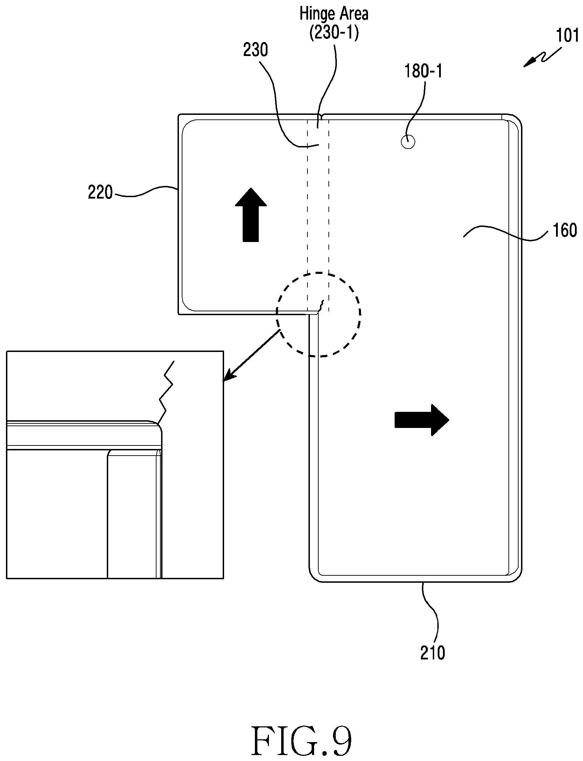

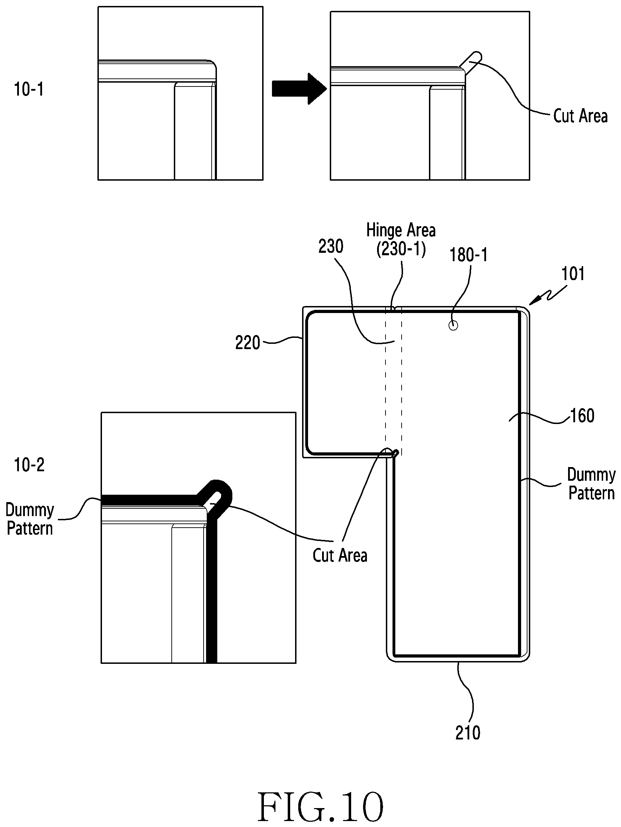

FIG. 9 to FIG. 11 are diagrams illustrating a reinforcing structure of an electronic device according to an embodiment.

In an embodiment, the second housing 220 of the electronic device 101 may be coupled to the first housing 210 so as to be rotatable about the hinge 230 with respect to the first housing 210.

In an embodiment, while the second housing 220 rotates about the hinge 230, the display 160 disposed on the first housing 210 and the second housing 220 may be affected by external force. For example, as illustrated in FIG. 9, external force caused by rotation of the second housing 220 may be applied in the force directions represented on the display 160.

In an embodiment, as described above, when force is applied to the display 160, damage such as crack may occur on the hinge area 230-1 of the display 160.

According to an embodiment, diagram 10-1 shows a structure in which a cut area is disposed in the electronic device 101 to prevent damage as the damage having occurred in the hinge area 230-1 of FIG. 9.

In an embodiment, as in FIG. 9, in order to prevent damage occurring due to external force caused by rotation of the second housing 220, a cut area obtained by previously cutting a part expected to be damaged like a crack from the display 160 may be disposed.

According to an embodiment, diagram 10-2 shows a structure in which a dummy pattern is disposed together with a cut area of the electronic device 101.

In an embodiment, the electronic device 101 may include a cut area on the display 160, and include a dummy pattern disposed along the edges of the electronic device 101.

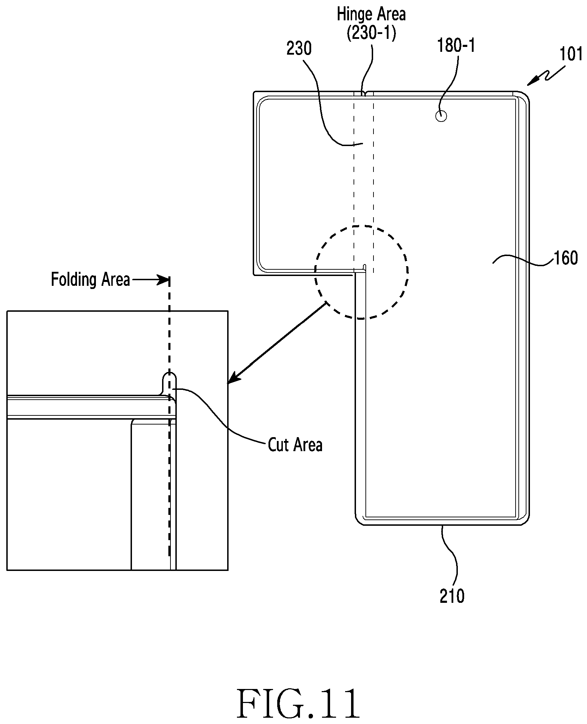

In an embodiment, referring to FIG. 11, in order to prevent damage occurring due to external force caused by rotation of the second housing 220 about the hinge 230, a cut area obtained by previously cutting a part of the display 230 in a direction parallel to the hinge 230 may be disposed.

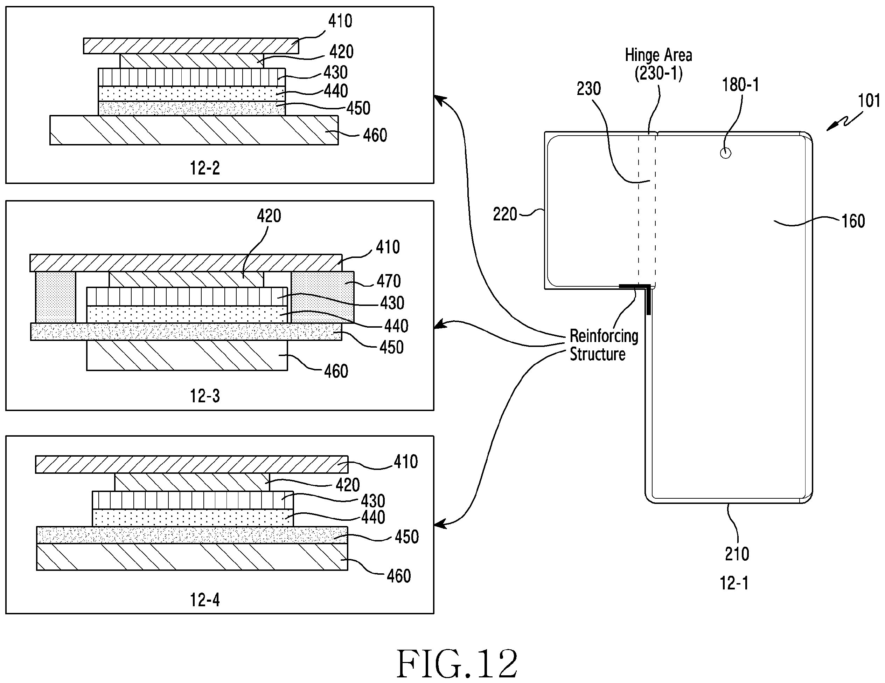

FIG. 12 is a diagram illustrating a reinforcing structure of an electronic device according to an embodiment.

According to an embodiment, diagram 12-2 to diagram 12-4 show cross sections of a laminated reinforcing structure of the electronic device 101 illustrated in diagram 12-1.

According to an embodiment, as described with reference to FIG. 9 to FIG. 11, the second housing 220 of the electronic device 101 rotates about the hinge 230, and external force caused by the rotation of the second housing 220 may be applied whereby damage in the hinge area 230-1 of the display 160 may occur.

According to an embodiment, the damage in the hinge area 230-1 may be resolved through application of a laminated reinforcing structure.

According to an embodiment, the laminated reinforcing structure may be a laminated structure in which a polyimide (PI) layer 450 is disposed on a lower metal layer 460, a display layer 440 is disposed on the PI layer 450, an impact absorption layer 430 is disposed on the display layer 440, an ultra-thin glass (UTG) layer 420 is disposed on the impact absorption layer 430, and a protection layer 410 is disposed on the ultra-thin glass (UTG) layer 420.

In an embodiment, referring to diagram 12-2, in the laminated reinforcing structure, the lower metal layer 460 may be extended to exist at the outermost part of the reinforcing structure, thereby implementing strength reinforcement against external force.

In an embodiment, referring to diagram 12-3, in the laminated reinforcing structure, the protection layer 410 and the PI layer 450 may be extended to allow a space between the protection layer 410 and the PI layer 450. A protection base member may be inserted into the space, thereby implementing strength reinforcement against external force. The protection base member may include a cushioning material such as PSA or resin.

In an embodiment, referring to diagram 12-4, in the laminated reinforcing structure, the protection layer 410, the PI layer 450, and the lower metal layer 460 may be extended to exist at the outermost part of the reinforcing structure, thereby implementing strength reinforcement against external force.

In an embodiment, the laminated structure described with reference to FIG. 12 is one example, and the disclosure may not be limited thereto.

For example, the laminated structure may include a different element other than the lower metal layer 460, the PI layer 450, the display layer 440, the impact absorption layer 430, the ultra-thin glass (UTG) layer 420, and the protection layer 410, and may be implemented by omitting some of the above elements.

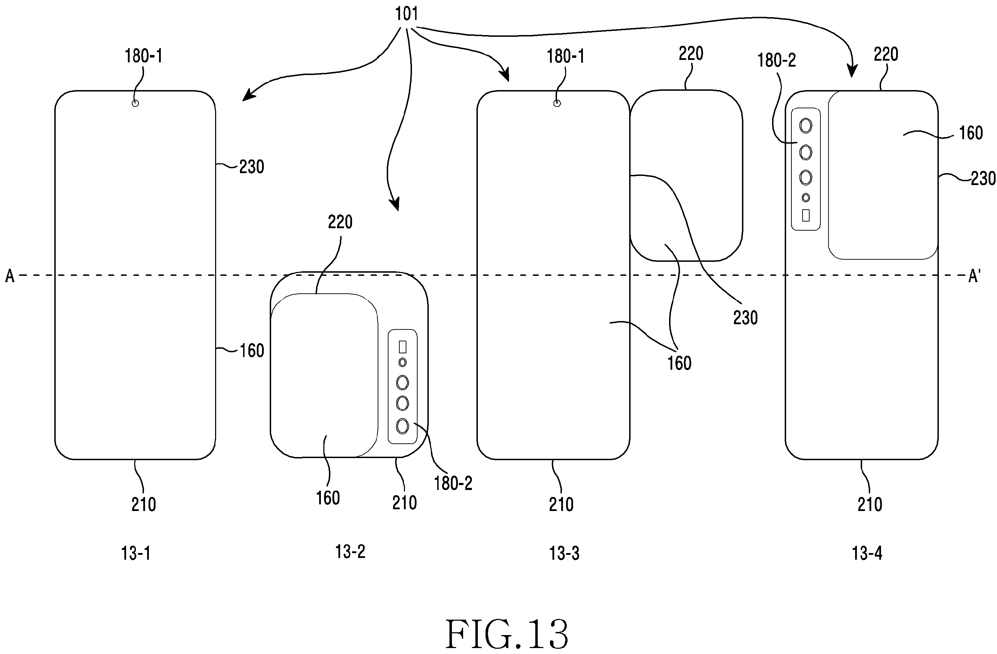

FIG. 13 is a diagram illustrating a structure of an electronic device according to another embodiment.

According to an embodiment, diagram 13-1 to diagram 13-4 show an electronic device 501 having a structural difference from the electronic device 101 described above. For example, the electronic device 501 may be folded along line A-A'.

According to an embodiment, diagram 13-1 shows a structure of the electronic device 501 before being folded along line A-A', and diagram 13-2 shows a structure of the electronic device 501 folded along line A-A'.

In an embodiment, the electronic device 501 may include the first housing 210 and the second housing 220, and the first housing 210 and the second housing 220 may be connected to each other through the hinge 230.

In an embodiment, the display 160 may be disposed on the front surface of the first housing 210 of the electronic device 501 and the front surface of the second housing 220.

In an embodiment, the front camera module 180-1 may be disposed on the front surface of the first housing 210 of the electronic device 501, and the rear camera module 180-2 may be disposed on the rear surface of the first housing 210.

In an embodiment, the first housing 210 of the electronic device 501 may be folded about line A-A'.

In an embodiment, the first housing 210 of the electronic device 501 may be folded or rotated in the direction perpendicular to the direction in which the second housing 220 rotates about the hinge 230.

In an embodiment, diagram 13-3 shows a structure in which the display 160 is fully extended by rotating the second housing 220 of the electronic device 501 about the hinge 230.

In an embodiment, the second housing 220 may rotate about the hinge 230 with respect to the first housing 210, whereby the second housing 220 has an angle of 180 degrees with respect to the first housing 210.

According to an embodiment, diagram 13-4 shows the electronic device 501 of diagram 13-1 when viewed from the rear thereof.

In an embodiment, the rear camera module 180-2 may be disposed on the rear surface of the first housing 210 of the electronic device 501.

In an embodiment, the second housing 220 may be rotated about the hinge 230, and the rear surface of the second housing 220 may face the rear surface of the first housing 210.

In an embodiment, the first housing 210 may be folded along line A-A', and the front surface of the second housing 220 may face the rear surface of the first housing 210.

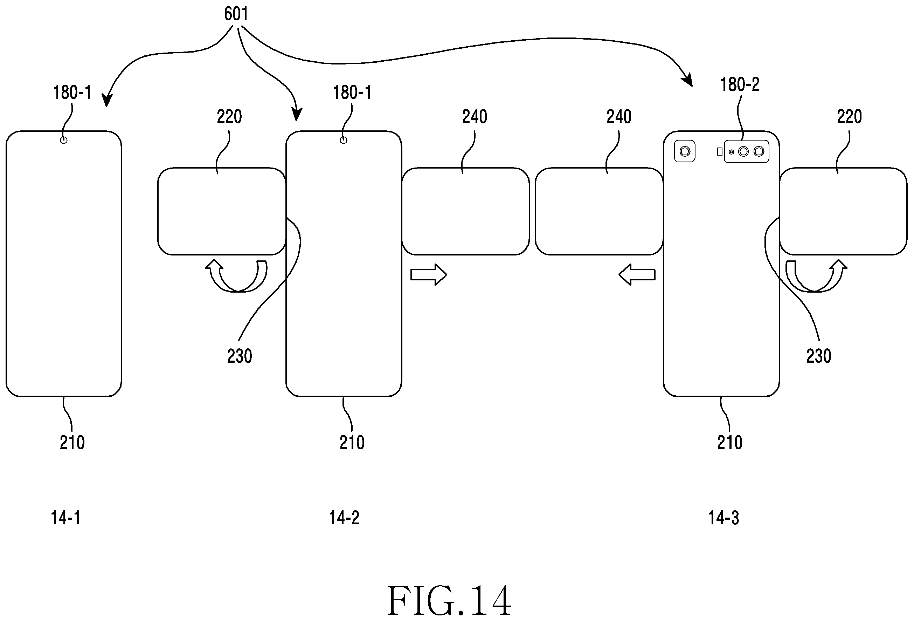

FIG. 14 is a diagram illustrating a structure of an electronic device according to another embodiment.

According to an embodiment, diagram 14-1 to diagram 14-3 show an electronic device 601 having a structural difference from the electronic device 101 and the electronic device 501 described above.

According to an embodiment, diagram 14-1 shows a structure before rotation and sliding of a housing (e.g., the second housing 220 and a third housing 240) of the electronic device 601, and diagram 14-2 and diagram 14-3 show a structure after rotation and sliding of the housing (e.g., the second housing 220 and the third housing 240) of the electronic device 601.

According to an embodiment, the electronic device 601 may include the first housing 210, the second housing 220, and the third housing 240.

In an embodiment, the first housing 210 and the second housing 220 may be connected to each other through the hinge 230. In an embodiment, the second housing 220 may be connected to the first housing 210 so as to be rotatable about the hinge 230 with respect to the first housing 210.

In an embodiment, the third housing 240 may slide into or out of the first housing 210. In an embodiment, the third housing 240 may slide into the first housing 210, and thus not be seen when viewed from the front of the electronic device 601 as illustrated in diagram 14-1. In an embodiment, the third housing 240 may slide out of the first housing 210, and thus be extended in the direction opposite to the second housing 220 as illustrated in diagram 14-2 and diagram 14-3.

In an embodiment, the front camera module 180-1 may be disposed on the front surface of the first housing 210 of the electronic device 601, and the rear camera module 180-2 may be disposed on the rear surface of the first housing 210.

In an embodiment, the rear camera module 180-2 may be disposed in an area not overlapping with the area on which each of the second housing 220 and the third housing 240 rotates and slides.

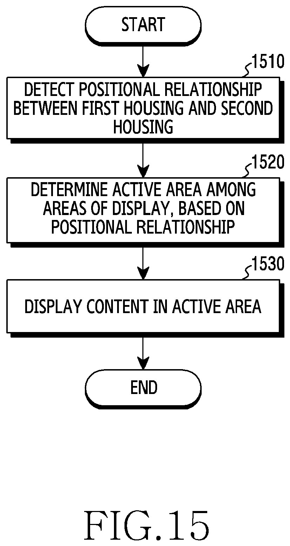

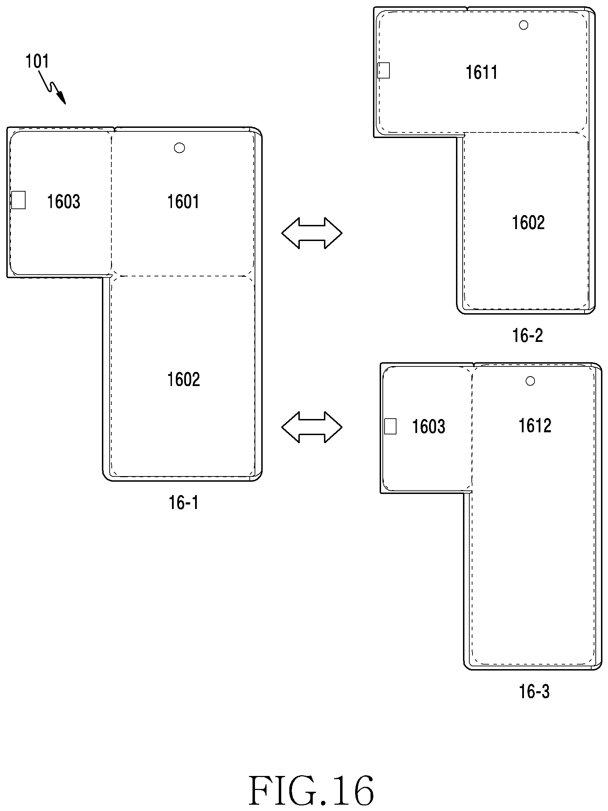

FIG. 15 is a flowchart illustrating an operation of an electronic device according to an embodiment. FIG. 15 may be described with reference to areas (e.g., a first area 1601, a second area 1602, a third area 1603, a fourth area 1611, and a fifth area 1612) of the display 160 in FIG. 16.

According to an embodiment, in operation 1510, an electronic device (e.g., the electronic device 101) may detect a positional relationship between a first housing (e.g., the first housing 210) and a second housing (e.g., the second housing 220).

According to an embodiment, the electronic device 101 may relatively compare the angle of the first housing 210 with respect to the ground surface with the angle of the second housing 220 with respect to the ground surface by using the sensor module 176 according to control of the processor 120, thereby detecting (or identifying) the positional relationship between the first housing and the second housing 220. For example, the electronic device 101 may compare the angle of the first housing 210 with respect to the ground surface with the angle of the second housing 220 with respect to the ground surface according to control of the processor 120, thereby detecting (or identifying) the angle between the first housing 210 and the second housing 220.

**In** an embodiment, the electronic device 101 may detect the distance between the first housing 210 and the second housing 220 by using the sensor module 176 according to control of the processor 120, and may identify the angle and the positional relationship between the first housing 210 and the second housing 220, based on the detected distance.

In an embodiment, the electronic device 101 may define a positional relationship between the first housing 210 and the second housing 220 by using an angle range according to control of the processor 120. For example, a case where the angle between the first housing 210 and the second housing 220 is 0 degrees (e.g., the rear surface of the first housing 210 faces the rear surface of the second housing 220) may be defined as a first positional relationship. As another example, a case where the angle between the first housing 210 and the second housing 220 is 180 degrees may be defined as a second positional relationship. In addition, a case where the angle between the first housing 210 and the second housing 220 exceeds 0 degrees and is smaller than 180 degrees may be defined as a third positional relationship.

According to an embodiment, in operation 1520, the electronic device (e.g., the electronic device 101) may determine an active area among areas of a display (e.g., the display 160), based on the positional relationship.

In an embodiment, the electronic device 101 may define a display area according to an extension state (e.g., the first positional relationship to the third positional relationship) of the display 160 according to control of the processor 120. For example, in a case of the first positional relationship according to control of the processor 120, the electronic device 101 may be defined to display a content in at least one area among the first area 1601, the second area 1602, and the third area 1603 of the display 160. In addition, the electronic device 101 may combine two or more areas among the first area 1601, the second area 1602, and the third area 1603 of the display 160 and display a content therein, based on a user's preset configuration and/or real-time configuration according to control of the processor 120. A content display area according to control of the processor 120 of the electronic device 101 may not be limited to the above description.

In an embodiment, the electronic device 101 may deactivate an area in which a content is not displayed, in case that a particular area of the display (e.g., the display 160) is activated and a content is displayed therein, according to control of the processor 120. For example, in a case of the first positional relationship, the electronic device 101 may deactivate the third area 1603 not to display a content while displaying a content in the first area 1601, the second area 1602, or the fifth area 1612 according to control of the processor 120. In this case, the electronic device 101 may maintain a state for reactivation while deactivating the third area 1603, according to control of the processor 120.

In an embodiment, the electronic device 101 may activate the third area, based on the maintained state, when the electronic device is to reactivate the third area 1603, according to control of the processor 120.

According to various embodiments, in relation to activation of each area of the display 160, the above areas are an example, and the disclosure may not be limited thereto. The electronic device 101 may display a user interface corresponding to the activated area according to control of the processor 120.

According to an embodiment, in operation 1530, the electronic device (e.g., the electronic device 101) may display a content in the active area.

In an embodiment, the electronic device 101 may display a content in the active area determined in operation 1520, according to control of the processor 120. For example, in a case of deactivating the third area 1603 not to display a content while activating the first area 1601, the second area 1602, or the fifth area 1612, the electronic device 101 may display a content in the first area 1601, the second area 1602, or the fifth area 1612 according to control of the processor 120.

According to various embodiments, in relation to displaying a content according to activation of each area of the display 160, the above areas are an example, and the disclosure may not be limited thereto. The electronic device 101 may display a content (e.g., a user interface) corresponding to an active area of various combinations according to control of the processor 120.

FIG. 16 is a diagram illustrating an area of a display of an electronic device according to an embodiment.

In an embodiment, a first housing (e.g., the first housing 210) may include a first edge having a first length, a second edge perpendicular to the first edge and having a second length shorter than the first length, a third edge parallel to the first edge and having the first length, and a fourth edge parallel to the second edge and having the second length. As another example, the first housing (e.g., the first housing 210) may have a rectangular shape surrounded by the first edge to the fourth edge.

In an embodiment, a second housing (e.g., the second housing 220) may be at least configured by: an edge (e.g., a fifth edge) having a vertical length of a third length shorter than the first length along the third edge; an edge (e.g., a sixth edge) which is perpendicular to the edge (e.g., the fifth edge) of a vertical length of the third length and has a transverse length of a fourth length; an edge (e.g., a seventh edge) which is parallel to the edge (e.g., the fifth edge) of a vertical length of the third length and has the third length; and an edge (e.g., an eighth edge) which is parallel to the edge (e.g., the sixth edge) of a transverse length of the fourth length and has the fourth length. As another example, the second housing (e.g., the second housing 220) may has a rectangular shape smaller than the first housing (e.g., the first housing 210), and may be surrounded by the fifth edge to the eighth edge.

In an embodiment, the display 160 of the electronic device 101 may include multiple areas to display a content.

In an embodiment, referring to diagram 16-1, the display160 may include the first area 1601, the second area 1602, and the third area1603. For example, the first area 1601 may be an area corresponding to the second length and the third length. The second area 1602 may be an area remaining after excluding the first area from the area of the first housing (e.g., the first housing 210). The third area 1603 may be an area corresponding to the second housing (e.g., the second housing 220).

In an embodiment, the electronic device 101 may display a content in at least one area among the first area 1601, the second area 1602, and the third area 1603 according to control of the processor 120.

In an embodiment, referring to diagram 16-2, the electronic device 101 may display a content in the fourth area 1611 corresponding to an area including the first area 1601 and the third area 1603 according to control of the processor 120. In an embodiment, the electronic device 101 may display a content also in the second area 1602 according to control of the processor 120.

In an embodiment, referring to diagram 16-3, the electronic device 101 may display a content in the fifth area 1612 corresponding to an area including the first area 1601 and the second area 1602 according to control of the processor 120. In an embodiment, the electronic device 101 may display a content also in the third area 1603 according to control of the processor 120.

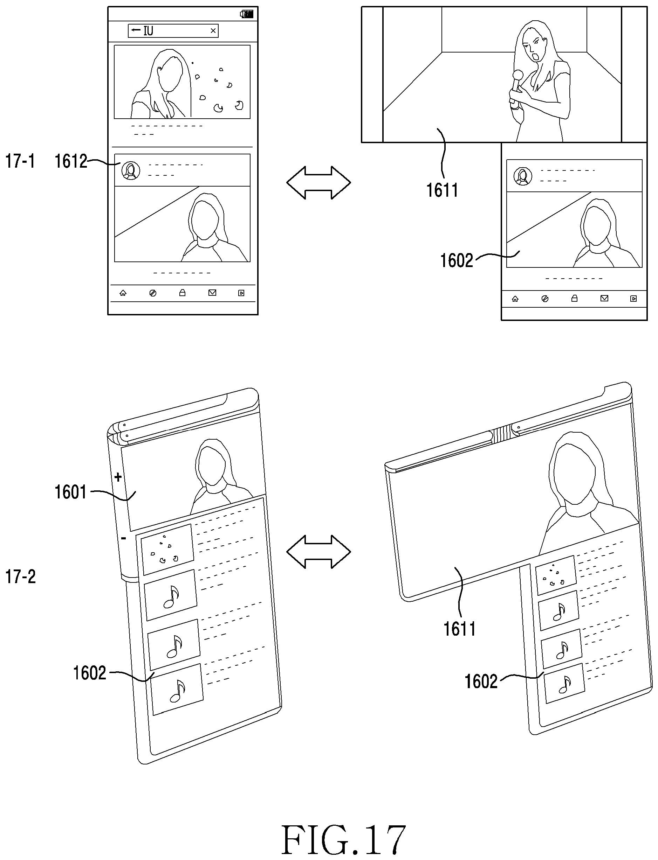

FIG. 17 is a diagram illustrating displaying of a content in a display area of an electronic device according to another embodiment.

In an embodiment, referring to diagram 17-1, the electronic device 101 may display a content in the fifth area 1612 of the display 160 according to control of the processor 120.

In an embodiment, the electronic device 101 may identify a positional relationship (e.g., a first positional relationship) between a first housing (e.g., the first housing 210) and a second housing (e.g., the second housing 220) by using the sensor module 176 according to control of a processor (e.g., the processor 120). For example, the first positional relationship may be a positional relationship in which the rear surfaces of the first housing (e.g., the first housing 210) and the second housing (e.g., the second housing 220) face. As another example, the first positional relationship may be a positional relationship before a display (e.g., the display 160) of the electronic device 101 is extended.

In an embodiment, in case that the display (e.g., the display 160) is fully extended by rotating the second housing (e.g., the second housing 220) about a hinge (e.g., the hinge 230), the electronic device 101 may identify a positional relationship (e.g., a second positional relationship) between the first housing (e.g., the first housing 210) and the second housing (e.g., the second housing 220) by using the sensor module 176 according to control of a processor (e.g., the processor 120). For example, the second positional relationship may be a positional relationship in which the first housing (e.g., the first housing 210) and the second housing (e.g., the second housing 220) have an angle of 180 degrees therebetween. As another example, the second positional relationship may be a positional relationship in which the display (e.g., the display 160) of the electronic device 101 is fully extended.

In an embodiment, the electronic device 101 may display a content at least in the fifth area 1612 in case that the first positional relationship is identified, according to control of the processor (e.g., the processor 120).

In an embodiment, the electronic device 101 may display a different content in each of the second area 1602 and the fourth area 1611, in case that the second positional relationship is identified, according to control of the processor (e.g., the processor 120) of the electronic device 101.

In an embodiment, referring to diagram 17-2, the electronic device 101 may display a different content in each of the first area 1601 and the second area 1602, in case that the first positional relationship is identified, according to control of the processor (e.g., the processor 120).

In an embodiment, the electronic device 101 may extend and display a content that has been displayed in the first area 1601, to correspond to the area of the fourth area 1611, in case that the second positional relationship is identified according to control of the processor (e.g., the processor 120). In addition, the electronic device 101 may maintain a content that has been displayed in the second area 1602 according to control of the processor (e.g., the processor 120).

In an embodiment, in case that the first positional relationship is identified while an operation is performed according to identification of the second positional relationship according to control of the processor (e.g., the processor 120), the electronic device 101 may display a content in an area (e.g., the fifth area 1612 of diagram 17-1, or the first area 1601 and the second area 1602 of diagram 17-2) of the display (e.g., the display 160) corresponding to the first positional relationship.

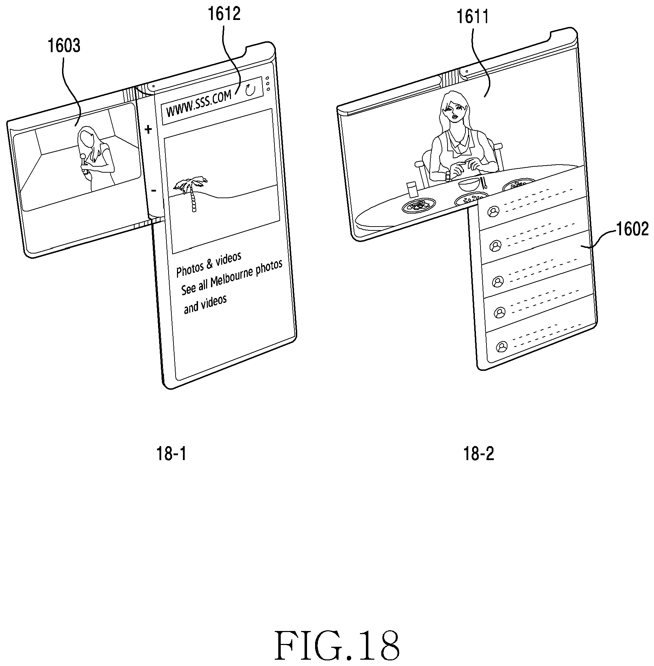

FIG. 18 is a diagram illustrating displaying of a content in a display area of an electronic device according to another embodiment.

In an embodiment, referring to diagram 18-1, the electronic device 101 may display different contents in the third area 1603 and the fifth area 1612 in case that the second positional relationship is identified according to control of the processor (e.g., the processor 120). For example, the electronic device 101 may display a video in the third area 1603 and display a web browser in the fifth area 1612 according to control of the processor 120.

In an embodiment, referring to diagram 18-2, the electronic device 101 may display different contents in the second area 1602 and the fourth area 1611 in case that the second positional relationship is identified according to control of the processor (e.g., the processor 120). For example, the electronic device 101 may display a web browser in the second area 1602 and display a video in the fourth area 1611 according to control of the processor 120.

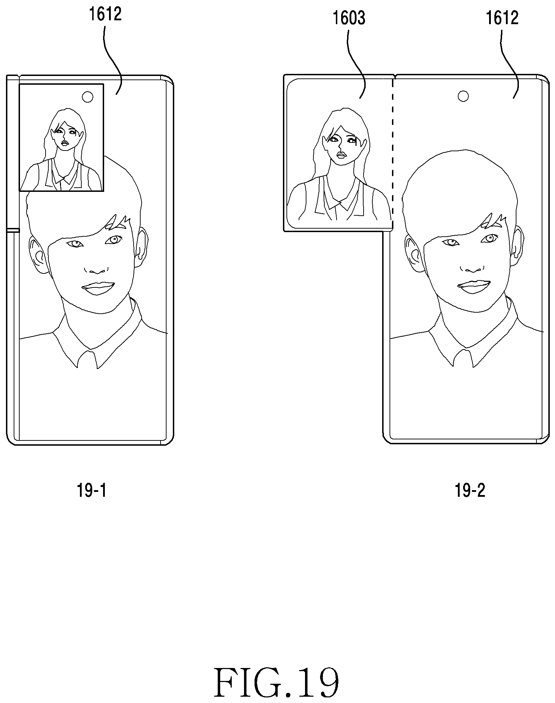

FIG. 19 is a diagram illustrating displaying of a content in a display area of an electronic device according to another embodiment. FIG. 19 shows a change in a display area of a display (e.g., the display 160) according to a positional relationship between a first housing (e.g., the first housing 210) and a second housing (e.g., the second housing 220) when a video call is performed.

In an embodiment, referring to diagram 19-1, the electronic device 101 may display a user's image and a counterpart's image together in the fifth area 1612 when a video call is performed in case that the first positional relationship is identified according to control of the processor (e.g., the processor 120). For example, the electronic device 101 may display a user's image having a small size in a part of the fifth area 1612 of the display 160 and display a counterpart's image having a large size in a part of the fifth area 1612 according to control of the processor 120.

In an embodiment, referring to diagram 19-2, the electronic device 101 may display a counterpart's image in the fifth area 1612 and display a user's image in the third area 1603 when a video call is performed in case that the second positional relationship is identified according to control of the processor (e.g., the processor 120).

In an embodiment, in case that the first positional relationship is identified while an operation is performed according to identification of the second positional relationship according to control of the processor (e.g., the processor 120), the electronic device 101 may display a content in an area (e.g., the fifth area 1612 of diagram 19-1, or the third area 1603 and the fifth area 1612 of diagram 19-2) of the display (e.g., the display 160) corresponding to the first positional relationship.

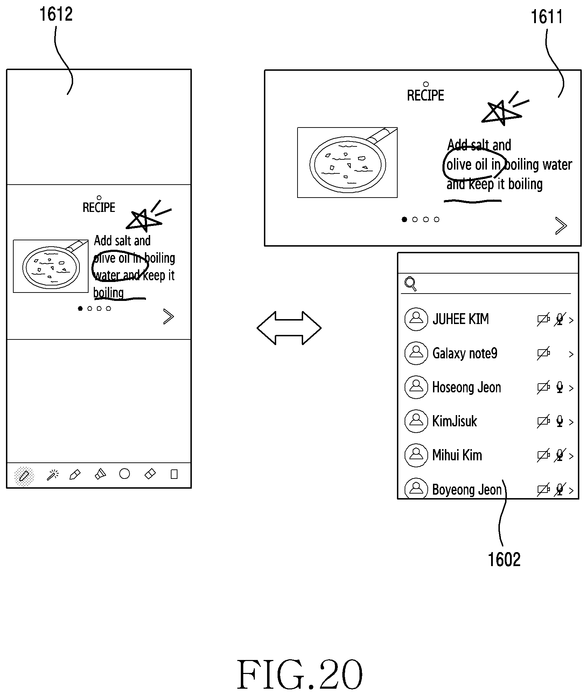

FIG. 20 is a diagram illustrating displaying of a content in a display area of an electronic device according to another embodiment. FIG. 20 shows a change in a display area of a display (e.g., the display 160) according to a positional relationship between a first housing (e.g., the first housing 210) and a second housing (e.g., the second housing 220) when a video conference is performed.

In an embodiment, referring to diagram 20-1, the electronic device 101 may display a shared content in the fifth area 1612 when a video conference is performed in case that the first positional relationship is identified according to control of the processor (e.g., the processor 120).

In an embodiment, referring to diagram 20-2, the electronic device 101 may display a shard content in the fourth area 1611 and display video conference-related information in the second area 1602 when a video conference is performed in case that the second positional relationship is identified according to control of the processor (e.g., the processor 120).

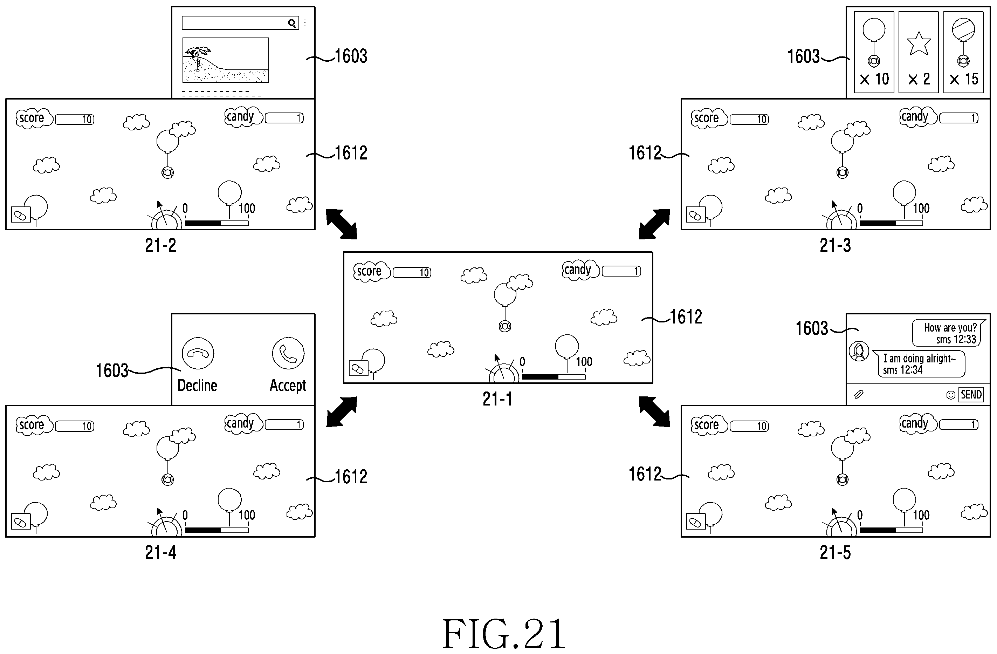

FIG. 21 is a diagram illustrating displaying of a content in a display area of an electronic device according to another embodiment.

FIG. 21 shows a change in a display area of a display (e.g., the display 160) according to a positional relationship between a first housing (e.g., the first housing 210) and a second housing (e.g., the second housing 220) when a game is played using the electronic device 101.

In an embodiment, referring to diagram 21-1, the electronic device 101 may display a game content in the fifth area 1612 when a game is played in case that the first positional relationship is identified according to control of the processor (e.g., the processor 120).

In an embodiment, diagram 21-2 to diagram 21-5 show performing different work through extension of the display (e.g., the display 160) while a user is playing a game by using the electronic device 101. The electronic device 101 may display a different content in the fifth area 1603 according to a user's preset configuration and/or real-time configuration in case that the second positional relationship is identified according to control of the processor (e.g., the processor 120).

In an embodiment, a user may configure a content to be displayed in the third area 1603 while playing a game, through a preset configuration and/or a real-time configuration. For example, a user may configure a content to be displayed in the third area 1603 among contents such as a web browser, a call screen, a messenger screen, and a video screen. The electronic device 101 may display a configured content in the third area 1603 according to control of the processor 120.

In an embodiment, referring to diagram 21-2, the electronic device 101 may display a web browser in the third area 1603 in case that the second positional relationship is identified according to control of the processor (e.g., the processor 120).

In an embodiment, referring to diagram 21-3, the electronic device 101 may display a video screen in the third area 1603 in case that the second positional relationship is identified according to control of the processor (e.g., the processor 120).

In an embodiment, referring to diagram 21-4, the electronic device 101 may display a messenger screen in the third area 1603 in case that the second positional relationship is identified according to control of the processor (e.g., the processor 120).

In an embodiment, referring to diagram 21-5, the electronic device 101 may display a call screen in the third area 1603 in case that the second positional relationship is identified according to control of the processor (e.g., the processor 120).

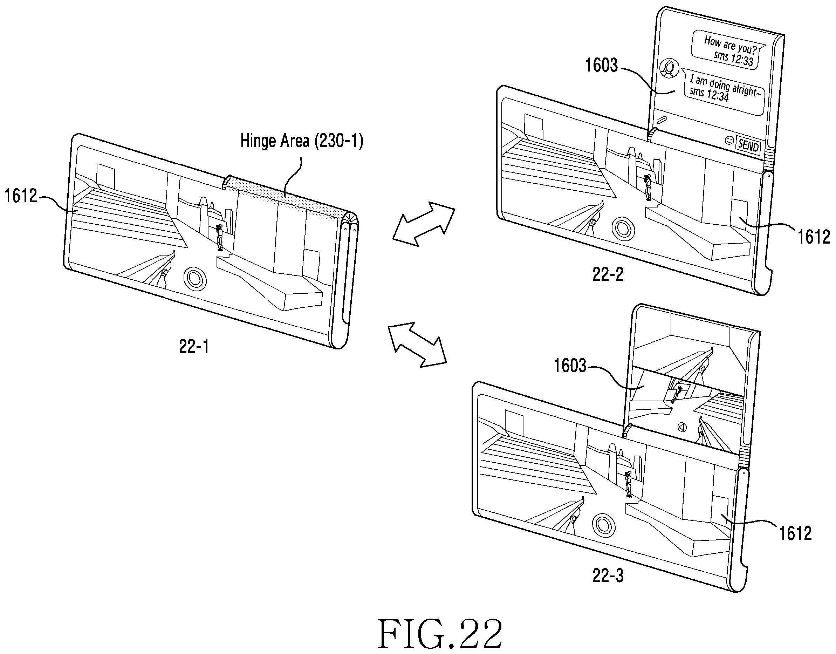

FIG. 22 is a diagram illustrating displaying of a content in a display area of an electronic device according to another embodiment.

In an embodiment, the electronic device 101 may display a notification through a hinge area (e.g., the hinge area 230-1) while displaying a content in the fifth area 1612 among areas of a display (e.g., the display 160) according to control of a processor (e.g., the processor 120).

In an embodiment, a user may pre-configure and/or configure, in real time, a content corresponding to an alarm displayed in the hinge area (e.g., the hinge area 230-1) of the display (e.g., the display 160). For example, a user may configure a content such as a messenger screen and a video screen as a content corresponding to an alarm.

In an embodiment, the electronic device 101 may display a content corresponding to an alarm in the third area 1603 in case that a positional relationship between a first housing (e.g., the first housing 210) and a second housing (e.g., the second housing 220) is identified as the second positional relationship, according to control of the processor (e.g., the processor 120).

In an embodiment, referring to diagram 22-1, the electronic device 101 may display, in the hinge area (e.g., the hinge area 230-1), a configured content corresponding to an alarm according to control of the processor 120.

In an embodiment, referring to diagram 22-2, in case that a messenger screen is configured by a user as a content corresponding to an alarm, when the second positional relationship is identified according to control of the processor (e.g., the processor 120), the electronic device 101 may display a messenger screen in the third area 1603.

In an embodiment, referring to diagram 22-2, in case that a video screen is configured by a user as a content corresponding to an alarm, when the second positional relationship is identified according to control of the processor (e.g., the processor 120), the electronic device 101 may display a video screen in the third area 1603.

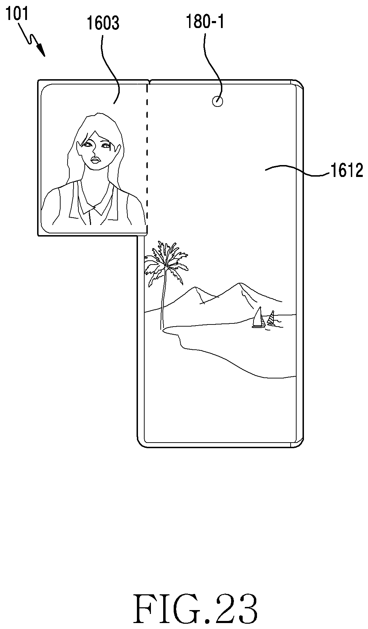

FIG. 23 is a diagram illustrating displaying of an image in a display area of an electronic device according to an embodiment.

In an embodiment, the electronic device 101 may display an image obtained via a camera module (e.g., the camera module 180) in the third area 1603 and the fifth area 1612 according to control of a processor (e.g., the processor 120).

In an embodiment, the electronic device 101 may display an image obtained via a front camera module (e.g., the front camera module 180-1) in the third area 1603 of a display (e.g., the display 160) according to control of the processor (e.g., the processor 120). In addition, the electronic device 101 may display an image obtained via a rear camera module (e.g., the rear camera module 180-2) in the fifth area 1612 of the display (e.g., the display 160) according to control of the processor (e.g., the processor 120).

In another embodiment, the electronic device 101 may display an image obtained via a front camera module (e.g., the front camera module 180-1) in the fifth area 1612 of the display (e.g., the display 160) according to control of the processor (e.g., the processor 120). In addition, the electronic device 101 may display an image obtained via a rear camera module (e.g., the rear camera module 180-2) in the third area 1603 of the display (e.g., the display 160) according to control of the processor (e.g., the processor 120).

In the embodiments described above, the areas (e.g., the third area 1603 and the fifth area 1612) in which the images obtained via the front camera module (e.g., the front camera module 180-1) and/or the rear camera module (e.g., the rear camera module 180-2) are displayed may follow a user's configuration, and a correspondence relationship may not be limited.

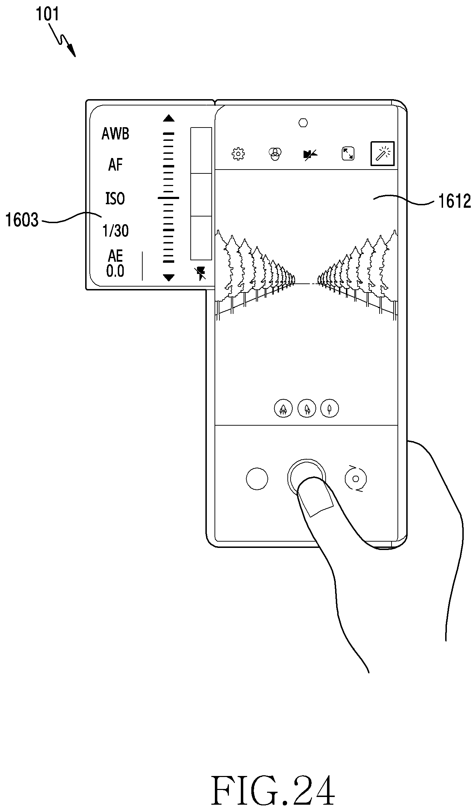

FIG. 24 is a diagram illustrating displaying of an image and a user interface in a display area of an electronic device according to an embodiment.

In an embodiment, the electronic device 101 may display a preview image obtained via the camera module 180 in the fifth area 1612 and a content related to camera functions and options in the third area 1603 according to control of a processor (e.g., the processor 120).

In an embodiment, the third area 1603 of the electronic device 101 may display a content related to camera functions and options, such as AWB, AF, AE, ISO speed, and shutter speed.

In an embodiment, when a user changes a camera function and option via the content display in the third area 1603, the electronic device 101 may reflect, in real time, a changed function and option to the preview image displayed in the fifth area 1612 according to control of the processor (e.g., the processor 120).

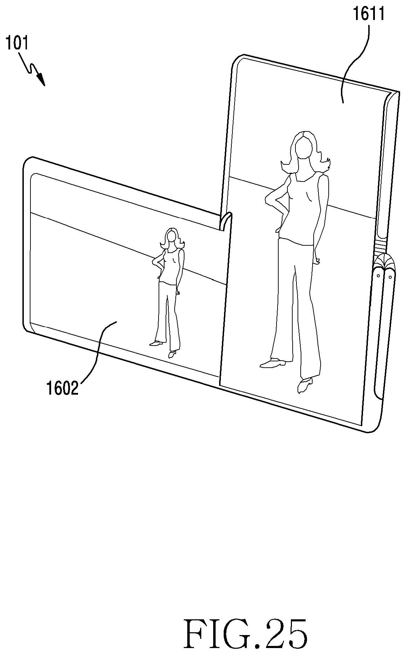

FIG. 25 is a diagram illustrating displaying of images having different attributes in a display area of an electronic device according to an embodiment.

In an embodiment, the electronic device 101 may display images having different angles of view, obtained via a camera module (e.g., the camera module 180), in areas of a display (e.g., the display 160), respectively. For example, the electronic device 101 may display an image having a first angle of view, obtained via a camera module (e.g., the camera module 180) in the second area 1602 according to control of a processor (e.g., the processor 120). In addition, the electronic device 101 may display an image having a second angle of view smaller than the first angle of view, obtained via the camera module (e.g., the camera module 180) in the fourth area 1611 according to control of the processor (e.g., the processor 120).

In various embodiments, when the electronic device 101 displays images having different angles of view in the areas of the display (e.g., the display 160), respectively, according to control of the processor (e.g., the processor 120), the above areas (e.g., the second area 1602 and the fourth area 1611) are an example, and may not be limited thereto.

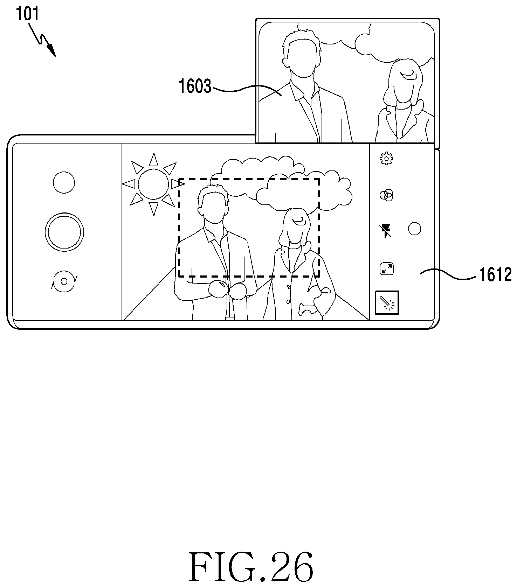

FIG. 26 is a diagram illustrating displaying of images having different attributes in a display area of an electronic device according to another embodiment.

In an embodiment, the electronic device 101 may display images having different magnifications, obtained via a camera module (e.g., the camera module 180), in areas of a display (e.g., the display 160), respectively.

In an embodiment, the electronic device 101 may display a preview image obtained via the camera module (e.g., the camera module 180) in the fifth area 1612 of the display (e.g., the display 160) according to control of a processor (e.g., the processor 120).

In an embodiment, the electronic device 101 may display, in the third area 1603 of the display (e.g., the display 160), a zoomed-in image enlarged at a magnification higher than that of the preview image displayed in the fifth area 1612 according to control of the processor (e.g., the processor 120).

In an embodiment, the electronic device 101 may display, in the third area 1603 of the display (e.g., the display 160), a zoomed-in image enlarged at a magnification higher than that of the preview image displayed in the fifth area 1612 according to control of the processor (e.g., the processor 120).

In another embodiment, the electronic device 101 may display, in the third area 1603 of the display (e.g., the display 160), a zoomed-out image enlarged at a magnification lower than that of the preview image displayed in the fifth area 1612 according to control of the processor (e.g., the processor 120).

In various embodiments, when the electronic device 101 displays images having different magnifications in the areas of the display (e.g., the display 160), respectively, according to control of the processor (e.g., the processor 120), the above areas (e.g., the third area 1603 and the fifth area 1612) are an example, and may not be limited thereto.

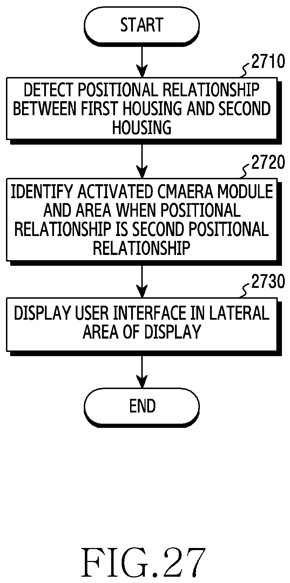

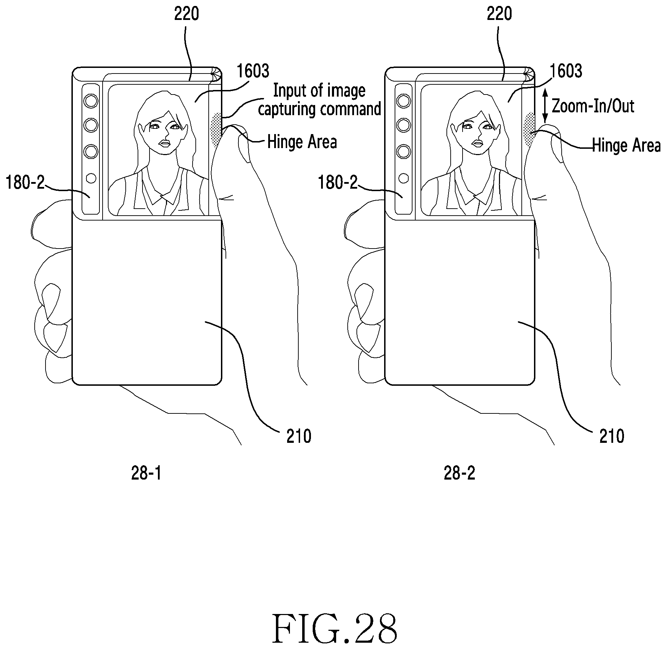

FIG. 27 is a flowchart illustrating displaying of a user interface in a lateral area of a display by an electronic device according to an embodiment. The flowchart of FIG. 27 will be described with reference to FIG. 28 showing displaying of a user interface in a lateral area of a display by an electronic device.

In operation 2710 according to an embodiment, the electronic device 101 may detect a positional relationship between a first housing (e.g., the first housing 210) and a second housing (e.g., the second housing 220).

In an embodiment, the electronic device 101 may detect a positional relationship (e.g., the first positional relationship or the second positional relationship) between the first housing 210 and the second housing 220 by using a sensor module (e.g., the sensor module 176) according to control of a processor (e.g., the processor 120).

In operation 2720 according to an embodiment, the electronic device 101 may identify an activated camera module and an activated area in case that the positional relationship is the second positional relationship.

In an embodiment, the electronic device 101 may identify an activated camera module among camera modules (e.g., the front camera module 180-1 and the rear camera module 180-2) in case that the positional relationship between the first housing 210 and the second housing 220 is identified as the second positional relationship according to control of the processor (e.g., the processor 120). For example, referring to diagram 28-1 and diagram 28-2, the electronic device 101 may identify that the positional relationship between the first housing 210 and the second housing 220 is the second positional relationship and the activated camera module is the rear camera module 180-2, according to control of the processor 120.

In an embodiment, the electronic device 101 may identify an activated area among the areas of a display (e.g., the display 160) in case that the positional relationship between the first housing 210 and the second housing 220 is identified as the second positional relationship according to control of the processor (e.g., the processor 120). For example, referring to diagram 28-1 and diagram 28-2, the electronic device 101 may identify that the activated area among the areas of the display (e.g., the display 160) is the third area 1603, according to control of the processor 120.

In operation 2730 according to an embodiment, the electronic device 101 may display a user interface in a lateral area (e.g., the hinge area 230-1) of the display (e.g., the display 160).

In an embodiment, the electronic device 101 may display a user interface in the hinge area 230-1 that is the lateral area of the display 160, in the second positional relationship according to control of the processor (e.g., the processor 120). For example, as illustrated in diagram 28-1, the electronic device 101 may display a user interface allowing an input of an image capturing command in the hinge area 230-1 according to control of the processor (e.g., the processor 120). As another example, as illustrated in diagram 28-2, the electronic device 101 may display a user interface allowing a zoom-in/out input of in the hinge area 230-1 according to control of the processor (e.g., the processor 120).

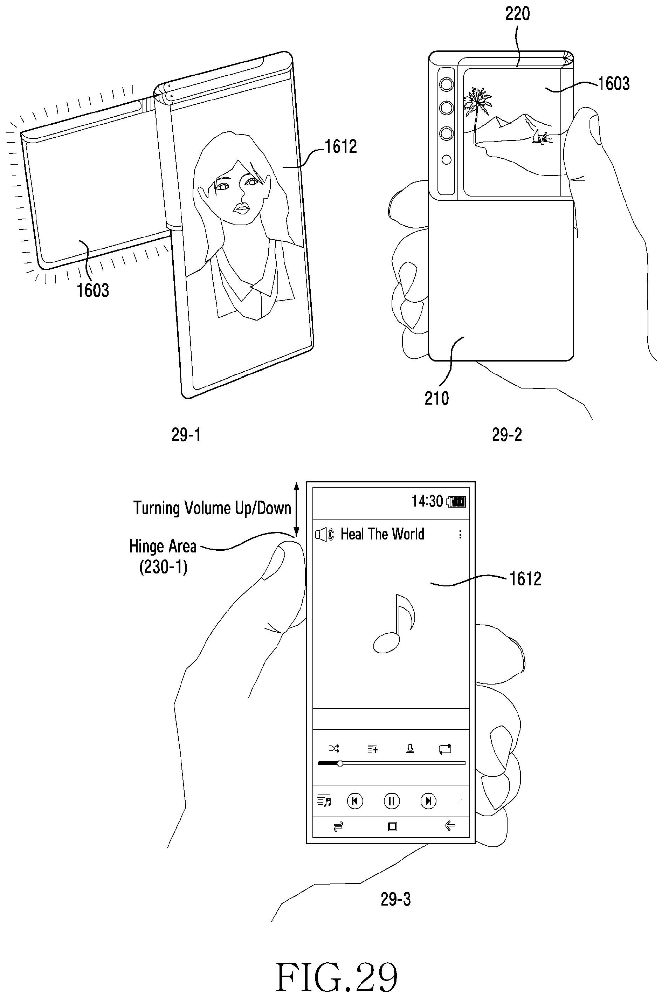

FIG. 29 is a diagram illustrating an effect resulting from an additional function of a display area of an electronic device according to an embodiment.

In an embodiment, referring to diagram 29-1, when a user takes a selfie image, one of the areas of a display (e.g., the display 160) may function as lighting. For example, the electronic device 101 may display an image obtained via a front camera module (e.g., the front camera module 180-2) in the fifth area 1612 according to control of a processor (e.g., the processor 120). In addition, in this case, the electronic device 101 may perform a flash function for lighting in the third area 1603 according to control of the processor (e.g., the processor 120).

In an embodiment, referring to diagram 29-2, the electronic device 101 may display a configured content in the fifth area 1612 and a CMF image in the third area 1603 that is not activated, according to control of the processor (e.g., the processor 120).

In an embodiment, referring to diagram 29-3, the electronic device 101 may display a user interface allowing an input for turning the volume up/down in the hinge area 230-1 according to control of the processor (e.g., the processor 120).

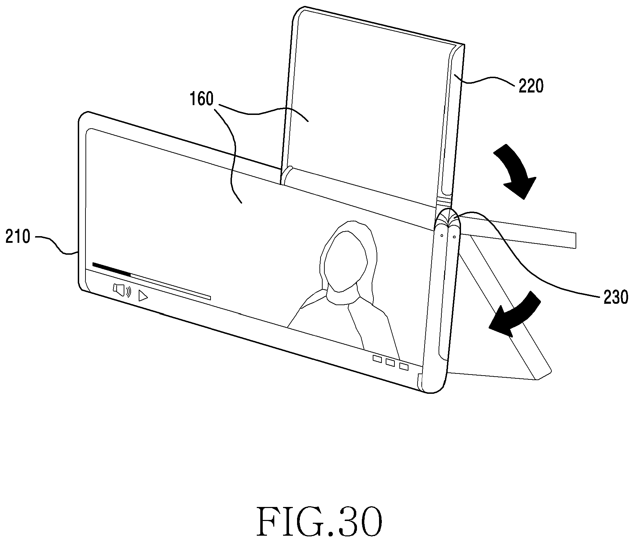

FIG. 30 is a diagram illustrating an additional function allowed by a structure of an electronic device according to an embodiment.

In an embodiment, the electronic device 101 may include the first housing 210 and the second housing 220, and the second housing 220 may be rotatable with respect to the first housing 210 about the hinge 230.

In an embodiment, the second housing 220 of the electronic device 101 may be freely stoppable between the first positional relationship and the second positional relationship. For example, the second housing 220 may be fixed at an angle between 0 degrees and 180 degrees made by the first housing 210 and the second housing 220.

In an embodiment, the electronic device 101 may display a content on a display (e.g., the display 160) even while the second housing 220 is rotating, according to control of a processor (e.g., the processor 120).

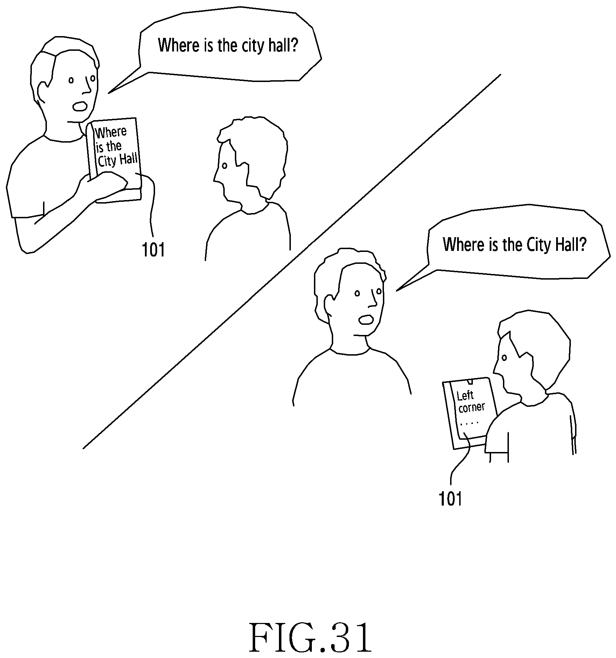

FIG. 31 is a diagram illustrating an effect resulting from an additional function of a display area of an electronic device according to an embodiment.

In an embodiment, a user may perform real-time translation/interpretation via multiple areas included in a display (e.g., the display 160) of the electronic device 101.

In an embodiment, in case that a user's input based on a first language is received, the electronic device 101 may display an output based on a second language in an area at which a counterpart is located, among the areas of the display (e.g., the display 160) according to control of a processor (e.g., the processor 120).

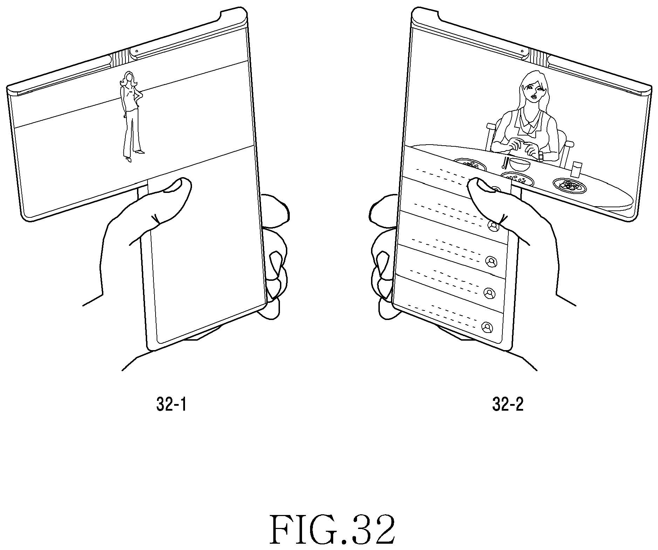

FIG. 32 is a diagram illustrating a screen displayed in a display area according to a handling state of an electronic device according to an embodiment. Diagram 32-1 shows a user handling the electronic device 101 with the left hand, and diagram 32-2 shows a user handling the electronic device 101 with the right hand.

Referring to diagram 32-1 and diagram 32-2, the electronic device 101 may display an image in a particular area among the areas of a display (e.g., the display 160) when a user's handling state is detected. For example, in case that it is detected that a user is handling the electronic device 101 with the left hand or the right hand, the electronic device 101 may display an image in areas of the display 160 to correspond to a handling state (e.g., handling with the left hand or handling with the right hand) according to control of a processor (e.g., the processor 120).

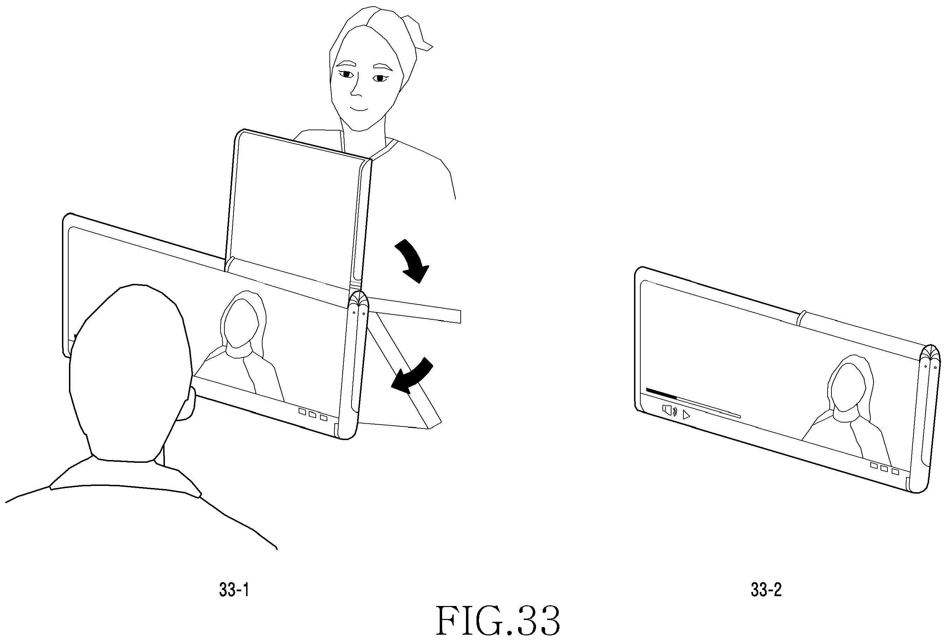

FIG. 33 is a diagram illustrating an additional function allowed by a structure of an electronic device according to an embodiment.

In an embodiment, the electronic device 101 may be fixed at a particular angle according to a user's manipulation while a display (e.g., the display 160) is being extended. In an embodiment, referring to diagram 33-1, a user may have adjusted an extension level of the display (e.g., the display 160) of the electronic device 101 to correspond to a particular angle. In this case, multiple areas of the display (e.g., the display 160) may face different directions, respectively.

In an embodiment, referring to diagram 33-2, multiple users may receive images displayed through the areas of the display (e.g., the display 160) facing different directions.

In an operation method of an electronic device (e.g., the electronic device 101), the electronic device (e.g., the electronic device 101) may include: a first housing (e.g., the first housing 210) including a first edge having a first length, a second edge that is perpendicular to the first edge and has a second length shorter than the first length, a third edge that is parallel to the first edge and has the first length, and a fourth edge that is parallel to the second edge and has the second length; a second housing (e.g., the second housing 220) that includes a fifth edge having a third length shorter than the first length along the third edge, and is rotatable about a hinge (e.g., the hinge 230) corresponding to the third length; a flexible display (e.g., the display 160) including a first area and a second area corresponding to the first housing (e.g., the first housing 210) and a third area corresponding to the second housing (e.g., the second housing 220), the first area being an area corresponding to the second length and the third length, the second area being an area remaining after excluding the first area from an area of the first housing (e.g., the first housing 210); and at least one processor (e.g., the processor 120) electrically connected to the flexible display (e.g., the display 160), and the electronic device (e.g., the electronic device 101) may perform, according to control of the at least one processor (e.g., the processor 120), operations of: detecting a positional relationship between the first housing (e.g., the first housing 210) and the second housing (e.g., the second housing 220); determining an active area among the areas of the flexible display (e.g., the display 160), based on the positional relationship; and displaying a content in the active area.

In the operation method of the electronic device (e.g., the electronic device 101), the third area may rotate with respect to the first area and the second area according to rotation of the second housing (e.g., the second housing 220) about the hinge (e.g., the hinge 230).

In the operation method of the electronic device (e.g., the electronic device 101), the electronic device (e.g., the electronic device 101) may further include a sensor module (e.g., the sensor module 176), and may perform an operation of detecting the positional relationship by using the sensor module (e.g., the sensor module 176).

In the operation method of the electronic device (e.g., the electronic device 101), the active area may be at least one area among the first area, the second area, and the third area.

In the operation method of the electronic device (e.g., the electronic device 101), in relation to the electronic device (e.g., the electronic device 101), the positional relationship may include a first positional relationship, a second positional relationship, and a third positional relationship, and the first positional relationship may be a positional relationship in which a rear surface of the first housing (e.g., the first housing 210) faces a rear surface of the second housing (e.g., the second housing 220), the second positional relationship may be a positional relationship in which the flexible display (e.g., the display 160) is fully extended by rotating the second housing (e.g., the second housing 220) about the hinge (e.g., the hinge 230), and the third positional relationship may be a positional relationship in which an angle between the first housing (e.g., the first housing 210) and the second housing (e.g., the second housing 220) is greater than that of the first positional relationship and is smaller than that of the second positional relationship.

In the operation method of the electronic device (e.g., the electronic device 101), the electronic device (e.g., the electronic device 101) may perform an operation of displaying a content in at least one area among the first area, the second area, and the third area in case that the positional relationship is identified as a first positional relationship.

In the operation method of the electronic device (e.g., the electronic device 101), the electronic device (e.g., the electronic device 101) may further perform an operation of displaying a content in a fourth area including the first area and the third area in case that it is identified that the positional relationship is changed from the first positional relationship to a second positional relationship.

In the operation method of the electronic device (e.g., the electronic device 101), the electronic device (e.g., the electronic device 101) may further perform an operation of displaying a content in a fourth area including the first area and the third area in case that it is identified that the positional relationship is changed from the first positional relationship to a second positional relationship.

In the operation method of the electronic device (e.g., the electronic device 101), the electronic device (e.g., the electronic device 101) may further perform operations of: displaying a first content in a fifth area including the first area and the second area in case that the positional relationship is identified as a first positional relationship; and in case that it is identified that the positional relationship is changed from the first positional relationship to the second positional relationship, displaying the first content in a fourth area including the first area and the third area and displaying a second content in the second area.

In the operation method of the electronic device (e.g., the electronic device 101), the electronic device (e.g., the electronic device 101) may be able to share the active area among the areas of the flexible display (e.g., the display 160) with a different electronic device (e.g., the electronic device 101).

In the operation method of the electronic device (e.g., the electronic device 101), the flexible display (e.g., the display 160) may include a hinge (e.g., the hinge 230) area corresponding to the hinge (e.g., the hinge 230), and may further perform an operation of displaying a user interface in the hinge (e.g., the hinge 230) area.

In the operation method of the electronic device (e.g., the electronic device 101), the electronic device (e.g., the electronic device 101) may further perform operations of: obtaining a user input through the user interface displayed in the hinge (e.g., the hinge 230) area; and performing a pre-designated function corresponding to the user interface.

In the operation method of the electronic device (e.g., the electronic device 101), the electronic device (e.g., the electronic device 101) may further perform an operation of displaying a notification in the hinge (e.g., the hinge 230) area.

In the operation method of the electronic device (e.g., the electronic device 101), the electronic device (e.g., the electronic device 101) may further perform an operation of displaying a content corresponding to the notification in the third area in case that a change to the second positional relationship after the displaying of the notification is identified.

In the operation method of the electronic device (e.g., the electronic device 101), contents corresponding to the positional relationship may be pre-configured.

In the operation method of the electronic device (e.g., the electronic device 101), the electronic device (e.g., the electronic device 101) may further perform operations of: displaying a first content in a fifth area including the first area and the second area in case that the positional relationship is identified as a first positional relationship; and displaying a content corresponding to a second positional relationship in the third area in case that it is identified that the positional relationship is changed from the first positional relationship to the second positional relationship

In the operation method of the electronic device (e.g., the electronic device 101), the content corresponding to the second positional relationship may be at least one of a web browser, a call screen, a messenger screen, and a video screen.

In the operation method of the electronic device (e.g., the electronic device 101), the electronic device (e.g., the electronic device 101) may include a front camera module (e.g., the front camera module 180-1) disposed on a front surface of the first housing (e.g., the first housing 210), and a rear camera module (e.g., the rear camera module 180-2) disposed on a rear surface of the first housing (e.g., the first housing 210), and the electronic device (e.g., the electronic device 101) may further perform operations of: displaying a front image obtained via the front camera module (e.g., the front camera module 180-1) in the third area; and displaying a rear image obtained via the rear camera module (e.g., the rear camera module 180-2) in a fifth area including the first area and the second area.

In the operation method of the electronic device (e.g., the electronic device 101), the electronic device (e.g., the electronic device 101) may include a rear camera module (e.g., the rear camera module 180-2) disposed on a rear surface of the first housing (e.g., the first housing 210), and the electronic device (e.g., the electronic device 101) may further perform an operation of displaying images having different angles of view, obtained via the rear camera module (e.g., the rear camera module 180-2) in at least two areas among the first area, the second area, the third area, a fourth area including the first area and the third area, and a fifth area including the first area and the second area.

In the operation method of the electronic device (e.g., the electronic device 101), the electronic device (e.g., the electronic device 101) may include a rear camera module (e.g., the rear camera module 180-2) disposed on a rear surface of the first housing (e.g., the first housing 210), and may further perform an operation of displaying images having different magnifications, obtained via the rear camera module (e.g., the rear camera module 180-2) in at least two areas among the first area, the second area, the third area, a fourth area including the first area and the third area, and a fifth area including the first area and the second area.

In the operation method of the electronic device (e.g., the electronic device 101), at least one area among the first area, the second area, the third area, a fourth area including the first area and the third area, and a fifth area including the first area and the second area may include a flash function and/or a CMF function.

In the operation method of the electronic device (e.g., the electronic device 101), the electronic device (e.g., the electronic device 101) may include a third housing connected to the first housing (e.g., the first housing 210) so as to be slidable into or out of the first housing (e.g., the first housing 210), the third housing including a sixth area capable of displaying a content, and the electronic device (e.g., the electronic device 101) may further perform, according to control of the at least one processor (e.g., the processor 120), an operation of displaying the content in at least one area among the first area, the second area, the third area, and the sixth area.

In the operation method of the electronic device (e.g., the electronic device 101), the electronic device (e.g., the electronic device 101) may further perform, according to control of the at least one processor (e.g., the processor 120), an operation of deactivating areas other than the determined active area.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An operation method of an electronic device, wherein the electronic device comprises:
a hinge (230);
a first housing (210) including a first edge having a first length, a second edge that is perpendicular to the first edge and has a second length shorter than the first length, a third edge that is parallel to the first edge and has the first length, and a fourth edge that is parallel to the second edge and has the second length;
a second housing (220) including a fifth edge having a third length shorter than the first length along the third edge, and is rotatable about the hinge corresponding to the third length;
a flexible display including a first area (1601) and a second area (1602) corresponding to the first housing and a third area (1603) corresponding to the second housing, the first area being an area corresponding to the second length and the third length, the second area being an area remaining after excluding the first area from an area of the first housing and a hinge area (230-1) corresponding to an area on which the hinge is disposed; and
at least one processor (120) electrically connected to the flexible display, and
the electronic device performs, according to control of the at least one processor, operations of:
detecting a positional relationship between the first housing and the second housing;
in case that the detected positional relationship is a first positional relationship, displaying a user interface allowing an input in the hinge area, and
in case that the detected positional relationship is a second positional relationship, displaying a content in a fourth area including the first area and the third area or displaying a content in a fifth area including the first area and the second area.

2. The method of claim 1, wherein the third area rotates with respect to the first area and the second area according to rotation of the second housing about the hinge.

3. The method of claim 1, wherein the electronic device further comprises a sensor module, and
performs an operation of detecting the positional relationship by using the sensor module.

4. The method of claim 1, wherein the electronic device further performs operations of:
determining an active area among the areas of the flexible display based on the positional relationship; and
displaying a content in the active area,
wherein the active area is at least one area among the first area, the second area, and the third area.

5. The method of claim 1, wherein the positional relationship comprises a first positional relationship, a second positional relationship, and a third positional relationship, and
the first positional relationship is a positional relationship in which a rear surface of the first housing faces a rear surface of the second housing, the second positional relationship is a positional relationship in which the flexible display is fully extended by rotating the second housing about the hinge, and the third positional relationship is a positional relationship in which an angle between the first housing and the second housing is greater than that of the first positional relationship and is smaller than that of the second positional relationship.

6. The method of claim 1, wherein the electronic device performs an operation of, in case that the positional relationship is identified as a first positional relationship, displaying a content in at least one area among the first area, the second area, and the third area.

7. The method of claim 6, wherein the electronic device further performs an operation of,
in case that it is identified that the positional relationship is changed from the first positional relationship to a second positional relationship,
displaying a content in a fourth area including the first area and the third area.

8. The method of claim 6, wherein the electronic device further performs an operation of,
in case that it is identified that the positional relationship is changed from the first positional relationship to a second positional relationship,
displaying a content in a fifth area including the first area and the second area.

9. The method of claim 1, wherein the flexible display comprises a hinge area corresponding to the hinge, and
further performs an operation of displaying a user interface in the hinge area.

10. The method of claim 9, wherein the electronic device further performs operations of:
obtaining a user input through the user interface displayed in the hinge area; and
performing a pre-designated function corresponding to the user interface.

11. The method of claim 9, wherein the electronic device further performs operations of:
displaying a notification in the hinge area; and
in case that a change to the second positional relationship after the displaying of the notification is identified,
displaying a content corresponding to the notification in the third area.

12. The method of claim 1, wherein the electronic device further performs operations of:
displaying a first content in a fifth area including the first area and the second area in case that the positional relationship is identified as a first positional relationship; and
displaying a content corresponding to a second positional relationship in the third area in case that it is identified that the positional relationship is changed from the first positional relationship to the second positional relationship.

13. The method of claim 1, wherein the electronic device comprises a front camera module disposed on a front surface of the first housing, and a rear camera module disposed on a rear surface of the first housing, and further performs operations of:
displaying a front image obtained via the front camera module in the third area; and
displaying a rear image obtained via the rear camera module in a fifth area including the first area and the second area.

14. The method of claim 1, wherein the electronic device comprises a rear camera module disposed on a rear surface of the first housing, and
further performs an operation of displaying images having different magnifications, obtained via the rear camera module in at least two areas among the first area, the second area, the third area, a fourth area including the first area and the third area, and a fifth area including the first area and the second area.

15. The method of claim 1, wherein the electronic device comprises a third housing connected to the first housing so as to be slidable into or out of the first housing, the third housing including a sixth area capable of displaying a content, and
the electronic device further performs, according to control of the at least one processor, an operation of displaying the content in at least one area among the first area, the second area, the third area, and the sixth area.

16. An electronic device comprising:
a hinge (230);
a first housing (210) including a first edge having a first length, a second edge that is perpendicular to the first edge and has a second length shorter than the first length, a third edge that is parallel to the first edge and has the first length, and a fourth edge that is parallel to the second edge and has the second length;
a second housing (220) including a fifth edge having a third length shorter than the first length along the third edge, and is rotatable about the hinge corresponding to the third length;
a flexible display including a first area (1601) and a second area (1602) corresponding to the first housing and a third area (1603) corresponding to the second housing, the first area being an area corresponding to the second length and the third length, the second area being an area remaining after excluding the first area from an area of the first housing and a hinge area (230-1) corresponding to an area on which the hinge is disposed; and
at least one processor (120) electrically connected to the flexible display, and
the electronic device being adapted to perform, according to control of the at least one processor, operations of:
detecting a positional relationship between the first housing and the second housing;
in case that the detected positional relationship is a first positional relationship, displaying a user interface allowing an input in the hinge area, and
in case that the detected positional relationship is a second positional relationship, displaying a content in a fourth area including the first area and the third area or displaying a content in a fifth area including the first area and the second area.

17. The electronic device of claim 16, wherein the third area is adapted to rotate with respect to the first area and the second area according to rotation of the second housing about the hinge.

18. The electronic device of claim 16, wherein the electronic device further comprises a sensor module, and
is adapted to perform an operation of detecting the positional relationship by using the sensor module.

19. The electronic device of claim 16, wherein the at least one processor is further configured to:
determine an active area among the areas of the flexible display, based on the positional relationship; and
display a content in the active area,
wherein the active area is at least one area among the first area, the second area, and the third area.

20. The electronic device of claim 16, wherein the positional relationship comprises a first positional relationship, a second positional relationship, and a third positional relationship, and
the first positional relationship is a positional relationship in which a rear surface of the first housing faces a rear surface of the second housing, the second positional relationship is a positional relationship in which the flexible display is fully extended by rotating the second housing about the hinge, and the third positional relationship is a positional relationship in which an angle between the first housing and the second housing is greater than that of the first positional relationship and is smaller than that of the second positional relationship.

## Patentansprüche

1. Betriebsverfahren einer elektronischen Vorrichtung, wobei die elektronische Vorrichtung Folgendes umfasst:
ein Scharnier (230);
ein erstes Gehäuse (210), das eine erste Kante, die eine erste Länge aufweist, eine zweite Kante, die senkrecht zu der ersten Kante ist und eine zweite Länge aufweist, die kürzer als die erste Länge ist, eine dritte Kante, die parallel zu der ersten Kante ist und die erste Länge aufweist, und eine vierte Kante, die parallel zu der zweiten Kante ist und die zweite Länge aufweist, enthält;
ein zweites Gehäuse (220), das eine fünfte Kante enthält, die eine dritte Länge, die kürzer als die erste Länge ist, entlang der dritten Kante aufweist, und um das Scharnier entsprechend der dritten Länge drehbar ist;
eine flexible Anzeige, die einen ersten Bereich (1601) und einen zweiten Bereich (1602) entsprechend dem ersten Gehäuse und einen dritten Bereich (1603) entsprechend dem zweiten Gehäuse, wobei der erste Bereich ein Bereich entsprechend der zweiten Länge und der dritten Länge ist, wobei der zweite Bereich ein Bereich ist, der verbleibt, nachdem der erste Bereich von einem Bereich des ersten Gehäuses ausgenommen wurde, und einen Scharnierbereich (230-1) entsprechend einem Bereich, auf dem das Scharnier angeordnet ist, enthält; und
mindestens einen Prozessor (120), der elektrisch mit der flexiblen Anzeige verbunden ist, und
wobei die elektronische Vorrichtung gemäß der Steuerung des mindestens einen Prozessors folgende Operationen durchführt:
Erkennen einer Positionsbeziehung zwischen dem ersten Gehäuse und dem zweiten Gehäuse;
falls die erkannte Positionsbeziehung eine erste Positionsbeziehung ist, Anzeigen einer Benutzerschnittstelle, die eine Eingabe in den Scharnierbereich ermöglicht, und
falls die erkannte Positionsbeziehung eine zweite Positionsbeziehung ist, Anzeigen eines Inhalts in einem vierten Bereich, der den ersten Bereich und den dritten Bereich enthält, oder Anzeigen eines Inhalts in einem fünften Bereich, der den ersten Bereich und den zweiten Bereich enthält.

2. Verfahren nach Anspruch 1, wobei sich der dritte Bereich in Bezug auf den ersten Bereich und den zweiten Bereich gemäß einer Drehung des zweiten Gehäuses um das Scharnier dreht.

3. Verfahren nach Anspruch 1, wobei die elektronische Vorrichtung ferner ein Sensormodul umfasst und
eine Operation eines Erkennens der Positionsbeziehung unter Verwendung des Sensormoduls durchführt.

4. Verfahren nach Anspruch 1, wobei die elektronische Vorrichtung ferner folgende Operationen durchführt:
Bestimmen eines aktiven Bereichs unter den Bereichen der flexiblen Anzeige basierend auf der Positionsbeziehung; und
Anzeigen eines Inhalts in dem aktiven Bereich,
wobei der aktive Bereich mindestens ein Bereich aus dem ersten Bereich, dem zweiten Bereich und dem dritten Bereich ist.

5. Verfahren nach Anspruch 1, wobei die Positionsbeziehung eine erste Positionsbeziehung, eine zweite Positionsbeziehung und eine dritte Positionsbeziehung umfasst und
die erste Positionsbeziehung eine Positionsbeziehung ist, bei der eine rückwärtige Oberfläche des ersten Gehäuses einer rückwärtigen Oberfläche des zweiten Gehäuses zugewandt ist, die zweite Positionsbeziehung eine Positionsbeziehung ist, bei der die flexible Anzeige durch Drehen des zweiten Gehäuses um das Scharnier vollständig ausgefahren ist, und die dritte Positionsbeziehung eine Positionsbeziehung ist, bei der ein Winkel zwischen dem ersten Gehäuse und dem zweiten Gehäuse größer als derjenige der ersten Positionsbeziehung und kleiner als derjenige der zweiten Positionsbeziehung ist.

6. Verfahren nach Anspruch 1, wobei die elektronische Vorrichtung eine Operation eines Anzeigens eines Inhalts in mindestens einem Bereich aus dem ersten Bereich, dem zweiten Bereich und dem dritten Bereich durchführt, falls die Positionsbeziehung als eine erste Positionsbeziehung identifiziert ist.

7. Verfahren nach Anspruch 6, wobei die elektronische Vorrichtung ferner eine folgende Operation durchführt:
falls identifiziert ist, dass die Positionsbeziehung von der ersten Positionsbeziehung zu einer zweiten Positionsbeziehung geändert ist,
Anzeigen eines Inhalts in einem vierten Bereich, der den ersten Bereich und den dritten Bereich enthält.

8. Verfahren nach Anspruch 6, wobei die elektronische Vorrichtung ferner eine folgende Operation durchführt:
falls identifiziert ist, dass die Positionsbeziehung von der ersten Positionsbeziehung zu einer zweiten Positionsbeziehung geändert ist,
Anzeigen eines Inhalts in einem fünften Bereich, der den ersten Bereich und den zweiten Bereich enthält.

9. Verfahren nach Anspruch 1, wobei die flexible Anzeige einen Scharnierbereich umfasst, der dem Scharnier entspricht, und
ferner eine Operation eines Anzeigens einer Benutzerschnittstelle in dem Scharnierbereich durchführt.

10. Verfahren nach Anspruch 9, wobei die elektronische Vorrichtung ferner folgende Operationen durchführt:
Erhalten einer Benutzereingabe über die Benutzerschnittstelle, die in dem Scharnierbereich angezeigt wird; und
Durchführen einer vorher bezeichneten Funktion entsprechend der Benutzerschnittstelle.

11. Verfahren nach Anspruch 9, wobei die elektronische Vorrichtung ferner folgende Operationen durchführt:
Anzeigen einer Benachrichtigung in dem Scharnierbereich; und
falls eine Änderung zu der zweiten Positionsbeziehung nach dem Anzeigen der Benachrichtigung identifiziert ist,
Anzeigen eines der Benachrichtigung entsprechenden Inhalts in dem dritten Bereich.

12. Verfahren nach Anspruch 1, wobei die elektronische Vorrichtung ferner folgende Operationen durchführt:
Anzeigen eines ersten Inhalts in einem fünften Bereich, der den ersten Bereich und den zweiten Bereich enthält, falls die Positionsbeziehung als eine erste Positionsbeziehung identifiziert ist; und
Anzeigen eines Inhalts entsprechend einer zweiten Positionsbeziehung in dem dritten Bereich, falls identifiziert ist, dass die Positionsbeziehung von der ersten Positionsbeziehung zu der zweiten Positionsbeziehung geändert ist.

13. Verfahren nach Anspruch 1, wobei die elektronische Vorrichtung ein vorderes Kameramodul, das auf einer vorderen Oberfläche des ersten Gehäuses angeordnet ist, und ein rückwärtiges Kameramodul, das auf einer rückwärtigen Oberfläche des ersten Gehäuses angeordnet ist, umfasst und ferner folgende Operationen durchführt:
Anzeigen eines über das vordere Kameramodul erhaltenen vorderen Bildes in dem dritten Bereich; und
Anzeigen eines über das rückwärtige Kameramodul erhaltenen rückwärtigen Bildes in einem fünften Bereich, der den ersten Bereich und den zweiten Bereich enthält.

14. Verfahren nach Anspruch 1, wobei die elektronische Vorrichtung ein rückwärtiges Kameramodul umfasst, das auf einer rückwärtigen Oberfläche des ersten Gehäuses angeordnet ist, und
ferner eine Operation eines Anzeigens von Bildern mit unterschiedlichen Vergrößerungen, die über das rückwärtige Kameramodul erhalten wurden, in mindestens zwei Bereichen aus dem ersten Bereich, dem zweiten Bereich, dem dritten Bereich, einem vierten Bereich, der den ersten Bereich und den dritten Bereich enthält, und einem fünften Bereich, der den ersten Bereich und den zweiten Bereich enthält, durchführt.

15. Verfahren nach Anspruch 1, wobei die elektronische Vorrichtung ein drittes Gehäuse umfasst, das mit dem ersten Gehäuse so verbunden ist, dass es in das erste Gehäuse hineinschiebbar oder aus ihm herausschiebbar ist, wobei das dritte Gehäuse einen sechsten Bereich enthält, der in der Lage ist, einen Inhalt anzuzeigen, und
die elektronische Vorrichtung ferner gemäß einer Steuerung des mindestens einen Prozessors eine Operation eines Anzeigens des Inhalts in mindestens einem Bereich aus dem ersten Bereich, dem zweiten Bereich, dem dritten Bereich und dem sechsten Bereich durchführt.

16. Elektronische Vorrichtung, umfassend:
ein Scharnier (230);
ein erstes Gehäuse (210), das eine erste Kante, die eine erste Länge aufweist, eine zweite Kante, die senkrecht zu der ersten Kante ist und eine zweite Länge aufweist, die kürzer als die erste Länge ist, eine dritte Kante, die parallel zu der ersten Kante ist und die erste Länge aufweist, und eine vierte Kante, die parallel zu der zweiten Kante ist und die zweite Länge aufweist, enthält;
ein zweites Gehäuse (220), das eine fünfte Kante enthält, die eine dritte Länge, die kürzer als die erste Länge ist, entlang der dritten Kante aufweist, und um das Scharnier entsprechend der dritten Länge drehbar ist;
eine flexible Anzeige, die einen ersten Bereich (1601) und einen zweiten Bereich (1602) entsprechend dem ersten Gehäuse und einen dritten Bereich (1603) entsprechend dem zweiten Gehäuse, wobei der erste Bereich ein Bereich entsprechend der zweiten Länge und der dritten Länge ist, wobei der zweite Bereich ein Bereich ist, der verbleibt, nachdem der erste Bereich von einem Bereich des ersten Gehäuses ausgenommen wurde, und einen Scharnierbereich (230-1) entsprechend einem Bereich, auf dem das Scharnier angeordnet ist, enthält; und
mindestens einen Prozessor (120), der elektrisch mit der flexiblen Anzeige verbunden ist, und
wobei die elektronische Vorrichtung dazu ausgelegt ist, gemäß der Steuerung des mindestens einen Prozessors folgende Operationen durchzuführen:
Erkennen einer Positionsbeziehung zwischen dem ersten Gehäuse und dem zweiten Gehäuse;
falls die erkannte Positionsbeziehung eine erste Positionsbeziehung ist, Anzeigen einer Benutzerschnittstelle, die eine Eingabe in den Scharnierbereich ermöglicht, und
falls die erkannte Positionsbeziehung eine zweite Positionsbeziehung ist, Anzeigen eines Inhalts in einem vierten Bereich, der den ersten Bereich und den dritten Bereich enthält, oder Anzeigen eines Inhalts in einem fünften Bereich, der den ersten Bereich und den zweiten Bereich enthält.

17. Elektronische Vorrichtung nach Anspruch 16, wobei der dritte Bereich dazu ausgelegt ist, sich in Bezug auf den ersten Bereich und den zweiten Bereich gemäß einer Drehung des zweiten Gehäuses um das Scharnier zu drehen.

18. Elektronische Vorrichtung nach Anspruch 16, wobei die elektronische Vorrichtung ferner ein Sensormodul umfasst und
dazu ausgelegt ist, eine Operation eines Erkennens der Positionsbeziehung unter Verwendung des Sensormoduls durchzuführen.

19. Elektronische Vorrichtung nach Anspruch 16, wobei der mindestens eine Prozessor ferner zu Folgendem konfiguriert ist:
Bestimmen eines aktiven Bereichs unter den Bereichen der flexiblen Anzeige basierend auf der Positionsbeziehung; und
Anzeigen eines Inhalts in dem aktiven Bereich,
wobei der aktive Bereich mindestens ein Bereich aus dem ersten Bereich, dem zweiten Bereich und dem dritten Bereich ist.

20. Elektronische Vorrichtung nach Anspruch 16, wobei die Positionsbeziehung eine erste Positionsbeziehung, eine zweite Positionsbeziehung und eine dritte Positionsbeziehung umfasst und
die erste Positionsbeziehung eine Positionsbeziehung ist, bei der eine rückwärtige Oberfläche des ersten Gehäuses einer rückwärtigen Oberfläche des zweiten Gehäuses zugewandt ist, die zweite Positionsbeziehung eine Positionsbeziehung ist, bei der die flexible Anzeige durch Drehen des zweiten Gehäuses um das Scharnier vollständig ausgefahren ist, und die dritte Positionsbeziehung eine Positionsbeziehung ist, bei der ein Winkel zwischen dem ersten Gehäuse und dem zweiten Gehäuse größer als derjenige der ersten Positionsbeziehung und kleiner als derjenige der zweiten Positionsbeziehung ist.

## Revendications

1. Procédé de fonctionnement d'un dispositif électronique, dans lequel le dispositif électronique comprend :
une charnière (230) ;
un premier boîtier (210) comprenant un premier bord comportant une première longueur, un deuxième bord qui est perpendiculaire au premier bord et comporte une deuxième longueur plus courte que la première longueur, un troisième bord qui est parallèle au premier bord et comporte la première longueur, et un quatrième bord qui est parallèle au deuxième bord et comporte la deuxième longueur ;
un second boîtier (220) comprenant un cinquième bord comportant une troisième longueur plus courte que la première longueur le long du troisième bord, et est rotatif autour de la charnière correspondant à la troisième longueur ;
un écran flexible comprenant une première zone (1601) et une deuxième zone (1602) correspondant au premier boîtier et une troisième zone (1603) correspondant au second boîtier, la première zone étant une zone correspondant à la deuxième longueur et à la troisième longueur, la deuxième zone étant une zone restante après exclusion de la première zone d'une zone du premier boîtier et une zone de charnière (230-1) correspondant à une zone sur laquelle la charnière est disposée ; et
au moins un processeur (120) relié électriquement à l'écran flexible, et
le dispositif électronique effectue, en fonction de la commande de l'au moins un processeur, des opérations de :
détection d'une relation de position entre le premier boîtier et le second boîtier ;
dans le cas où la relation de position détectée est une première relation de position, affichage d'une interface utilisateur permettant une entrée dans la zone de charnière, et
dans le cas où la relation de position détectée est une deuxième relation de position, affichage d'un contenu dans une quatrième zone comprenant la première zone et la troisième zone ou affichage d'un contenu dans une cinquième zone comprenant la première zone et la deuxième zone.

2. Procédé selon la revendication 1, dans lequel la troisième zone tourne par rapport à la première zone et à la deuxième zone en fonction de la rotation du second boîtier autour de la charnière.

3. Procédé selon la revendication 1, dans lequel le dispositif électronique comprend en outre un module de capteur, et
effectue une opération de détection de la relation de position en utilisant le module de capteur.

4. Procédé selon la revendication 1, dans lequel le dispositif électronique effectue en outre les opérations suivantes :
détermination d'une zone active parmi les zones de l'écran flexible sur la base de la relation de position ; et
affichage d'un contenu dans la zone active,
dans lequel la zone active est au moins une zone parmi la première zone, la deuxième zone et la troisième zone.

5. Procédé selon la revendication 1, dans lequel la relation de position comprend une première relation de position, une deuxième relation de position et une troisième relation de position, et
la première relation de position est une relation de position dans laquelle une surface arrière du premier boîtier fait face à une surface arrière du second boîtier, la deuxième relation de position est une relation de position dans laquelle l'écran flexible est entièrement déployé par la rotation du second boîtier autour de la charnière, et la troisième relation de position est une relation de position dans laquelle un angle entre le premier boîtier et le second boîtier est supérieur à celui de la première relation de position et est inférieur à celui de la deuxième relation de position.

6. Procédé selon la revendication 1, dans lequel le dispositif électronique effectue une opération, dans le cas où la relation de position est identifiée comme une première relation de position, d'affichage d'un contenu dans au moins une zone parmi la première zone, la deuxième zone et la troisième zone.

7. Procédé selon la revendication 6, dans lequel le dispositif électronique effectue en outre une opération,
dans le cas où il est identifié que la relation de position est changée de la première relation de position à une deuxième relation de position,
d'affichage d'un contenu dans une quatrième zone comprenant la première zone et la troisième zone.

8. Procédé selon la revendication 6, dans lequel le dispositif électronique effectue en outre une opération,
dans le cas où il est identifié que la relation de position est changée de la première relation de position à une deuxième relation de position,
d'affichage d'un contenu dans une cinquième zone comprenant la première zone et la deuxième zone.

9. Procédé selon la revendication 1, dans lequel l'écran flexible comprend une zone de charnière correspondant à la charnière, et
effectue en outre une opération d'affichage d'une interface utilisateur dans la zone de charnière.

10. Procédé selon la revendication 9, dans lequel le dispositif électronique effectue en outre les opérations de :
obtention d'une entrée utilisateur par l'intermédiaire de l'interface utilisateur affichée dans la zone de charnière ; et
exécution d'une fonction pré-désignée correspondant à l'interface utilisateur.

11. Procédé selon la revendication 9, dans lequel le dispositif électronique effectue en outre les opérations de :
affichage d'une notification dans la zone de charnière ; et
en cas d'identification d'un changement de la deuxième relation de position après l'affichage de la notification,
affichage d'un contenu correspondant à la notification dans la troisième zone.

12. Procédé selon la revendication 1, dans lequel le dispositif électronique effectue en outre les opérations de :
affichage d'un premier contenu dans une cinquième zone comprenant la première zone et la deuxième zone dans le cas où la relation de position est identifiée comme une première relation de position ; et
affichage d'un contenu correspondant à une deuxième relation de position dans la troisième zone dans le cas où il est identifié que la relation de position est changée de la première relation de position à la deuxième relation de position.

13. Procédé selon la revendication 1, dans lequel le dispositif électronique comprend un module de caméra avant disposé sur une surface avant du premier boîtier, et un module de caméra arrière disposé sur une surface arrière du premier boîtier, et effectue en outre les opérations de :
affichage d'une image avant obtenue via le module de caméra avant dans la troisième zone ; et
affichage d'une image arrière obtenue via le module de caméra arrière dans une cinquième zone comprenant la première zone et la deuxième zone.

14. Procédé selon la revendication 1, dans lequel le dispositif électronique comprend un module de caméra arrière disposé sur une surface arrière du premier boîtier, et
effectue en outre une opération d'affichage d'images comportant des grossissements différents, obtenues via le module de caméra arrière dans au moins deux zones parmi la première zone, la deuxième zone, la troisième zone, une quatrième zone comprenant la première zone et la troisième zone, et une cinquième zone comprenant la première zone et la deuxième zone.

15. Procédé selon la revendication 1, dans lequel le dispositif électronique comprend un troisième boîtier connecté au premier boîtier de manière à pouvoir coulisser dans ou hors du premier boîtier, le troisième boîtier comprenant une sixième zone capable d'afficher un contenu, et
le dispositif électronique effectue en outre, en fonction de la commande de l'au moins un processeur, une opération d'affichage du contenu dans au moins une zone parmi la première zone, la deuxième zone, la troisième zone et la sixième zone.

16. Dispositif électronique comprenant :
une charnière (230) ;
un premier boîtier (210) comprenant un premier bord comportant une première longueur, un deuxième bord qui est perpendiculaire au premier bord et comporte une deuxième longueur plus courte que la première longueur, un troisième bord qui est parallèle au premier bord et comporte la première longueur, et un quatrième bord qui est parallèle au deuxième bord et comporte la deuxième longueur ;
un second boîtier (220) comprenant un cinquième bord comportant une troisième longueur plus courte que la première longueur le long du troisième bord, et est rotatif autour de la charnière correspondant à la troisième longueur ;
un écran flexible comprenant une première zone (1601) et une deuxième zone (1602) correspondant au premier boîtier et une troisième zone (1603) correspondant au second boîtier, la première zone étant une zone correspondant à la deuxième longueur et à la troisième longueur, la deuxième zone étant une zone restante après exclusion de la première zone d'une zone du premier boîtier et une zone de charnière (230-1) correspondant à une zone sur laquelle la charnière est disposée ; et
au moins un processeur (120) relié électriquement à l'écran flexible, et
le dispositif électronique étant adapté pour effectuer, conformément à la commande de l'au moins un processeur, des opérations de
détection d'une relation de position entre le premier boîtier et le second boîtier ;
dans le cas où la relation de position détectée est une première relation de position, affichage d'une interface utilisateur permettant une entrée dans la zone de charnière, et
dans le cas où la relation de position détectée est une deuxième relation de position, affichage d'un contenu dans une quatrième zone comprenant la première zone et la troisième zone ou affichage d'un contenu dans une cinquième zone comprenant la première zone et la deuxième zone.

17. Dispositif électronique selon la revendication 16, dans lequel la troisième zone est adaptée pour tourner par rapport à la première zone et la deuxième zone en fonction de la rotation du second boîtier autour de la charnière.

18. Dispositif électronique selon la revendication 16, dans lequel le dispositif électronique comprend en outre un module de capteur, et est adapté pour effectuer une opération de détection de la relation de position en utilisant le module de capteur.

19. Dispositif électronique selon la revendication 16, dans lequel l'au moins un processeur est en outre configuré pour :
déterminer une zone active parmi les zones de l'écran flexible, sur la base de la relation de position ; et
afficher un contenu dans la zone active,
dans lequel la zone active est au moins une zone parmi la première zone, la deuxième zone et la troisième zone.

20. Procédé selon la revendication 16, dans lequel la relation de position comprend une première relation de position, une deuxième relation de position et une troisième relation de position, et
la première relation de position est une relation de position dans laquelle une surface arrière du premier boîtier fait face à une surface arrière du second boîtier, la deuxième relation de position est une relation de position dans laquelle l'écran flexible est entièrement déployé par la rotation du second boîtier autour de la charnière, et la troisième relation de position est une relation de position dans laquelle un angle entre le premier boîtier et le second boîtier est supérieur à celui de la première relation de position et est inférieur à celui de la deuxième relation de position.
